(19) Europäisches Patentamt
European Patent Office
Office européen des brevets

(11) **EP 4 703 712 A1**

(12) **EUROPEAN PATENT APPLICATION**
published in accordance with Art. 153(4) EPC

(43) Date of publication:
**04.03.2026 Bulletin 2026/10**

(21) Application number: **24796607.0**

(22) Date of filing: **12.03.2024**

(51) International Patent Classification (IPC):
**G01N 22/00** (2006.01) **G01S 13/89** (2006.01)
**G01S 15/89** (2006.01)

(52) Cooperative Patent Classification (CPC):
**G01N 22/00; G01S 13/89; G01S 15/89**

(86) International application number:
**PCT/JP2024/009507**

(87) International publication number:
**WO 2024/224849 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.04.2023 JP 2023071029**

(71) Applicant: **K-Theory Inc.
Kobe-shi, Hyogo 651-0087 (JP)**

(72) Inventors:
• **KIMURA, Fumitoshi
Kobe-shi, Hyogo 651-0087 (JP)**
• **KIMURA, Kenjiro
Kobe-shi, Hyogo 651-0087 (JP)**
• **KIMURA, Noriaki
Kobe-shi, Hyogo 651-0087 (JP)**

(74) Representative: **KATZAROV S.A.
Geneva Business Center
12 Avenue des Morgines
1213 Petit-Lancy (CH)**

(54) **IMAGING DEVICE AND IMAGING METHOD**

(57) An imaging device (100) includes: a plurality of transmitters (101) that each transmit a wave to a measurement area in the atmosphere; a plurality of receivers (102) that each receive a scattered wave of the wave from the measurement area; and an information processing circuit (103) that images an object in the measurement area using measurement data of the scattered wave. The information processing circuit (103): derives a scattering field function using the measurement data; derives an imaging function that is defined using an amount output from the scattering field function in response to inputting an imaging target position into the scattering field function; and images the object in the measurement area using the imaging function. The information processing circuit (103) reflects in the scattering field function that the wavenumber of the wave changes as the refractive index in the atmosphere changes with height in the atmosphere.

FIG. 7

EP 4 703 712 A1

**Description**

[Technical Field]

The present disclosure relates to an imaging device, etc., that images an object in a measurement area using measurement data of scattered waves.

[Background Art]

As techniques related to an imaging device or the like for imaging an object in a measurement area using measurement data of scattered waves, there are techniques described in Patent Literatures (PTLs) 1 to 5.

For example, according to the technique described in PTL 1, beams sent out from a microwave sender are incident on an object to be inspected, and the amplitudes and phases of scattered beams are detected by a microwave detector. Then, the distribution of dielectric constants is calculated from output signals output from the microwave detector to display a tomogram of the object to be inspected.

[Citation List]

[Patent Literature]

[PTL 1] Japanese Unexamined Patent Application Publication No. S62-66145
[PTL 2] WO 2014/125815
[PTL 3] WO 2015/136936
[PTL 4] WO 2021/020387
[PTL 5] WO 2021/053971

[Summary of Invention]

[Technical Problem]

However, it is not easy to image an object in a measurement area using measurement data of scattered waves. More specifically, estimating measurement data on scattered waves radiated from the measurement area in relation to waves that are incident on the measurement area when the condition in the measurement area is known is called a forward problem and is easy. However, obtaining the condition in the measurement area when measurement data on scattered waves is known is called an inverse problem and is not easy.

When the measurement area is in the atmosphere, the density of the atmosphere differs depending on altitude, so waves incident on the measurement area may not travel straight. Therefore, when the measurement area is in the atmosphere, it is not easy to image an object using waves and scattered waves.

In view of this, the present disclosure provides an imaging device or the like that is capable of imaging an object in the measurement area in the atmosphere with high accuracy.

[Solution to Problem]

An imaging device according to one aspect of the present disclosure includes: a plurality of transmitters that each transmit a wave to a measurement area in an atmosphere; a plurality of receivers that each receive a scattered wave of the wave from the measurement area; and an information processing circuit that images an object in the measurement area using measurement data of the scattered wave. In imaging the object, the information processing circuit: derives, using the measurement data, a scattering field function that receives a transmission position of the wave and a reception position of the scattered wave as input and outputs an amount of the scattered wave at the reception position; derives an imaging function that receives an imaging target position as input and outputs an image intensity at the imaging target position, and is defined using an amount output from the scattering field function in response to inputting the imaging target position into the scattering field function as the transmission position and the reception position; and images the object in the measurement area using the imaging function. In deriving the scattering field function, the information processing circuit reflects in the scattering field function that a wavenumber of the wave changes as a refractive index in the atmosphere changes with height in the atmosphere.

These general or specific aspects may be implemented as a system, a device or apparatus, a method, an integrated circuit, a computer program, or a non-transitory computer-readable recording medium such as a CD-ROM, or any combination thereof.

[Advantageous Effects of Invention]

According to the present disclosure, it is possible to image an object in the measurement area in the atmosphere with high accuracy.

[Brief Description of Drawings]

[FIG. 1]

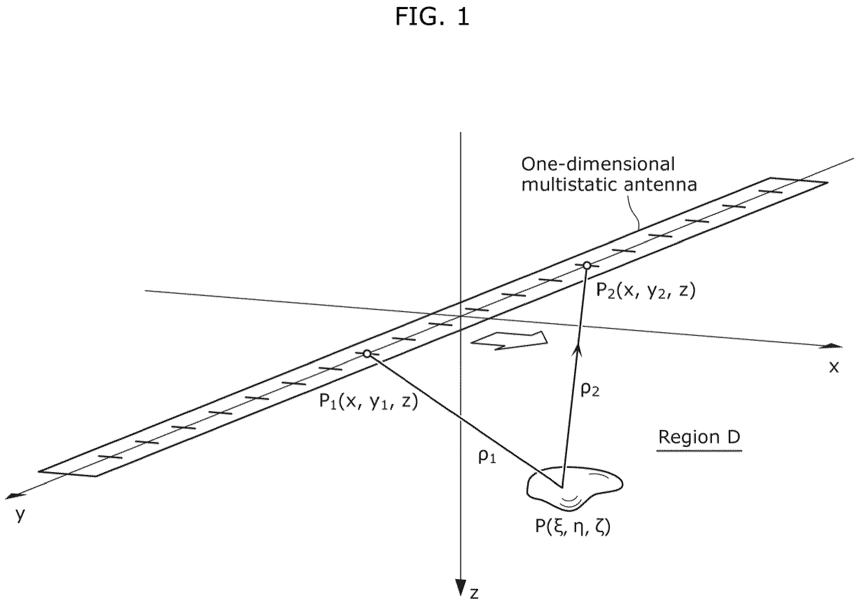

FIG. 1 is a conceptual diagram showing a one-dimensional multistatic array antenna.
[FIG. 2]

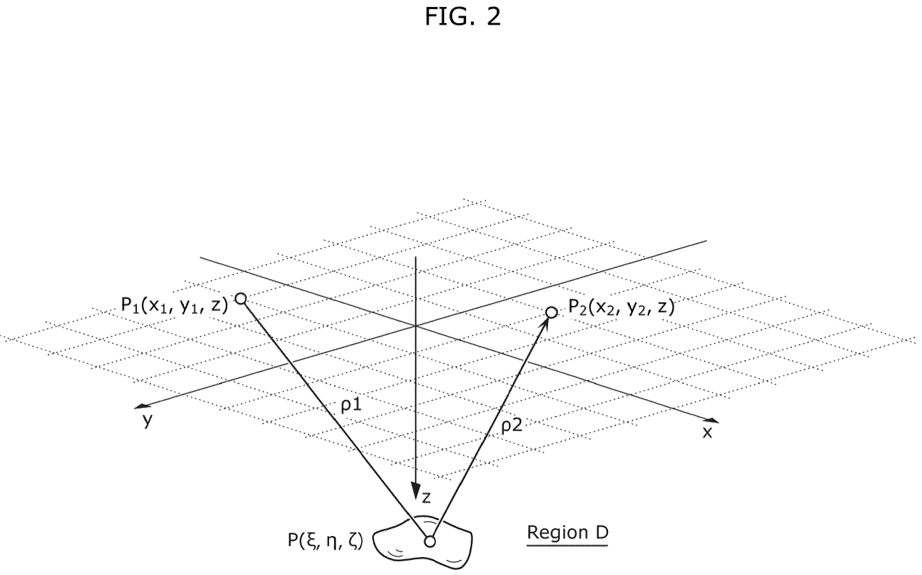

FIG. 2 is a conceptual diagram showing the relationship between a transmission point and a reception point in a plane.
[FIG. 3]

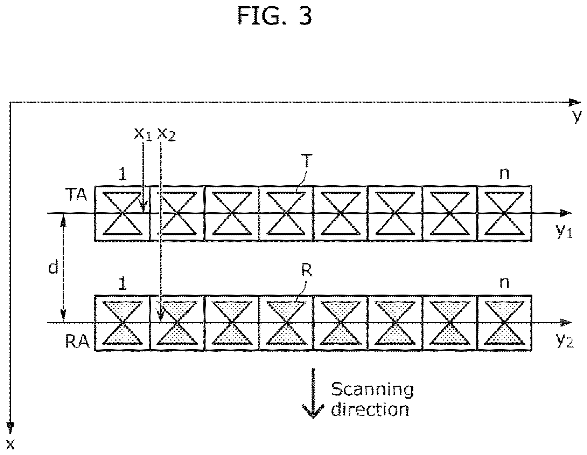

FIG. 3 is a conceptual diagram showing an example of coordinates relating to a semi-two-dimensional array antenna.
[FIG. 4]

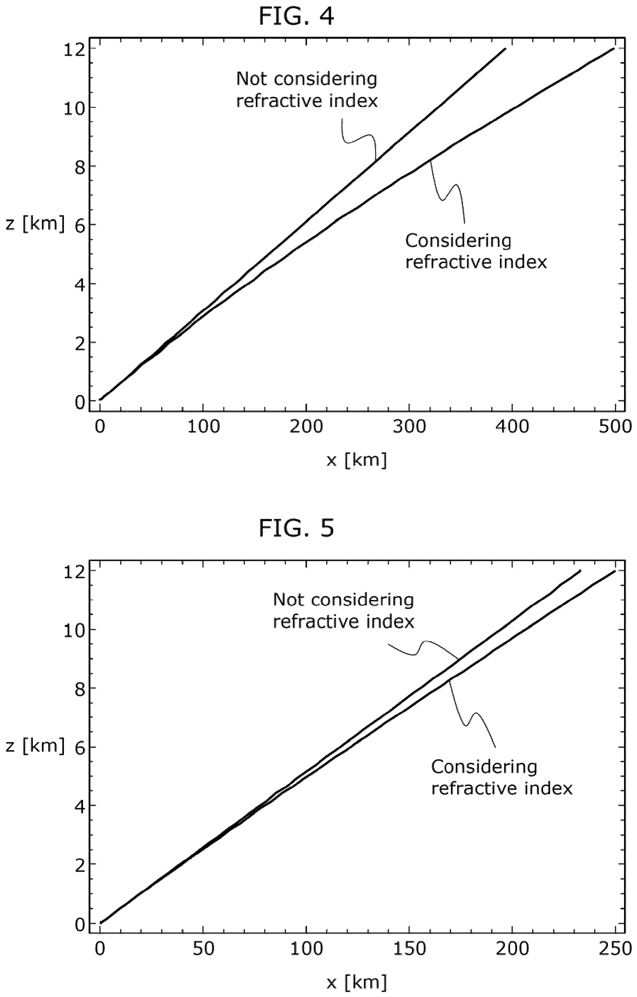

FIG. 4 is a simulation diagram illustrating the trajectory of a 1 GHz electromagnetic wave radiated at a radiation angle of 1° from the ground surface.
[FIG. 5]
FIG. 5 is a simulation diagram illustrating the trajectory of a 1 GHz electromagnetic wave radiated at a radiation angle of 2.56° from the ground surface.
[FIG. 6]

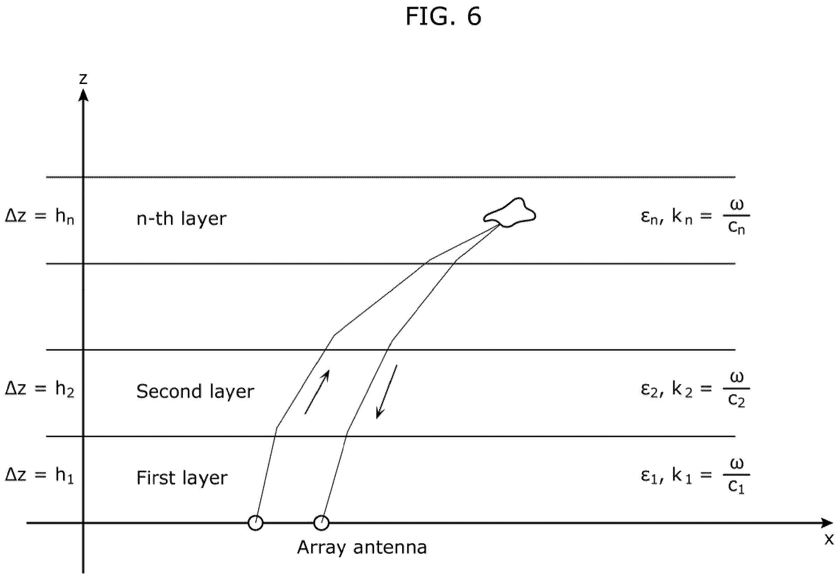

FIG. 6 is a conceptual diagram illustrating a multilayer medium.
[FIG. 7]

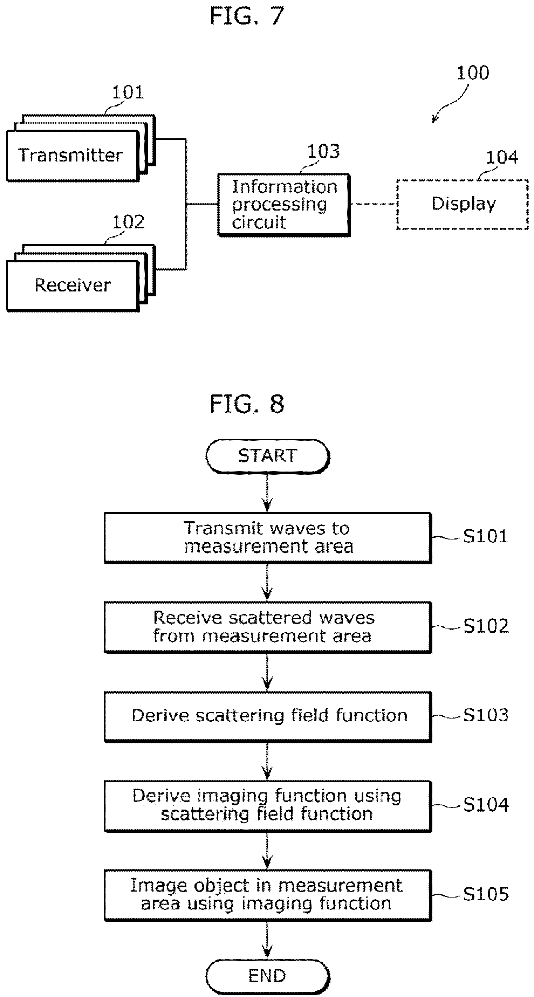

FIG. 7 is a block diagram showing a basic configuration of an imaging device.
[FIG. 8]
FIG. 8 is a flowchart showing basic operations of an imaging device.

[Description of Embodiments]

An imaging device according to one aspect of the present disclosure includes: a plurality of transmitters that each transmit a wave to a measurement area in an atmosphere; a plurality of receivers that each receive a scattered wave of the wave from the measurement area; and an information processing circuit that images an object in the measurement area using measurement data of the scattered wave. In imaging the object, the information processing circuit: derives, using the measurement data, a scattering field function that receives a transmission position of the wave and a reception position of the scattered wave as input and outputs an amount of the scattered wave at the reception position; derives an imaging function that receives an imaging target position as input and outputs an image intensity at the imaging target position, and is defined using an amount output from the scattering field function in response to inputting the imaging target position into the scattering field function as the transmission position and the reception position; and images the object in the measurement area using the imaging function. In deriving the scattering field function, the information processing circuit reflects in the scattering field function that a wavenumber of the wave changes as a refractive index in the atmosphere changes with height in the atmosphere.
This allows the imaging device to derive the scattering field function and the imaging function in which the atmospheric refractive index that varies with altitude is reflected. Accordingly, the imaging device is capable of imaging an object in the measurement area in the atmosphere with high accuracy.
For example, the plurality of transmitters and the plurality of receivers are arranged along a straight line parallel to a y-axis, the measurement area in the atmosphere is divided into a plurality of layers, and the scattering field function of an n-th layer of the plurality of layers is expressed as:

[Math. 1]

$$\varphi_n\left(x, y_1, y_2, z, k_n\right)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)$$

$$\cdot e^{i\left\{\sqrt{\left(\sqrt{k_n^2 - k_{y_1}^2} + \sqrt{k_n^2 - k_{y_2}^2}\right)^2 - k_x^2}\right\}(z - \sum_{j=1}^{n-1} h_j)} \prod_{j=1}^{n-1} e^{i\left\{\sqrt{\left(\sqrt{k_j^2 - k_{y_1}^2} + \sqrt{k_j^2 - k_{y_2}^2}\right)^2 - k_x^2}\right\} h_j} dk_x dk_{y_1} dk_{y_2}$$

where x and z of the scattering field function respectively represent an x-coordinate and a z-coordinate of the transmission position and the reception position, $y_1$ of the scattering field function represents a y-coordinate of the transmission position, $y_2$ of the scattering field function represents a y-coordinate of the reception position, $k_1$, $k_j$, and $k_n$ respectively represent wavenumbers of the wave in a first layer, a j-th layer, and the n-th layer of the plurality of layers, $h_j$ represents a height of the j-th layer, and $k_x$, $k_{y1}$, and $k_{y2}$ respectively represent variables corresponding to wavenumbers with respect to x, $y_1$, and $y_2$ of the scattering field function, and

[Math. 2]

$$\tilde{\varphi}$$

represents the measurement data that has been Fourier transformed.

This allows the imaging device to image an object in the measurement area in the atmosphere with high accuracy by using the scattering field function derived layer by layer from the measurement data obtained by the plurality of transmitters and the plurality of receivers arranged in a straight line.

For example, the imaging function of the n-th layer of the plurality of layers is expressed as:

[Math. 3]

$$\rho_n(x, y, z)$$

$$= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} e^{i k_{zn}(z - \sum_{j=1}^{n-1} h_j)} \tilde{\varphi}(k_x, k_{y_1}, k_{y_2}, k_1)$$

$$\cdot \prod_{j=1}^{n-1} e^{i\left\{\sqrt{\left(\sqrt{k_j^2 - k_{y_1}^2} + \sqrt{k_j^2 - k_{y_2}^2}\right)^2 - k_x^2}\right\} h_j} \cdot \left(\frac{dk_n}{dk_{zn}}\right)\left(\frac{d\omega}{dk_n}\right) dk_x dk_{y_1} dk_{y_2} dk_{zn}$$

where x, y, and z of the imaging function respectively represent an x-coordinate, a y-coordinate, and a z-coordinate of the imaging target position, $\omega$ represents an angular frequency of the wave, and $k_{zn}$ is defined as follows:

[Math. 4]

$$k_{zn} = \sqrt{\left(\sqrt{k_n^2 - k_{y_1}^2} + \sqrt{k_n^2 - k_{y_2}^2}\right)^2 - k_x^2}$$

.

This allows the imaging device to image an object in the measurement area in the atmosphere with high accuracy by using the imaging function derived layer by layer from the measurement data obtained by the plurality of transmitters and the plurality of receivers arranged in a straight line.

For example, the plurality of transmitters and the plurality of receivers are arranged along a straight line parallel to a y-axis, and the scattering field function is expressed as:

[Math. 5]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)$$

$$\cdot e^{i \int_0^z \sqrt{\left(\sqrt{k(z_a)^2 - k_{y_1}^2} + \sqrt{k(z_a)^2 - k_{y_2}^2}\right)^2 - k_x^2} \, dz_a} \, dk_x dk_{y_1} dk_{y_2}$$

where x and z of the scattering field function respectively represent an x-coordinate and a z-coordinate of the transmission position and the reception position, $y_1$ of the scattering field function represents a y-coordinate of the transmission position, $y_2$ of the scattering field function represents a y-coordinate of the reception position, k represents a wavenumber of the wave at a position where the z-coordinate is z, $k_1$ represents a wavenumber of the wave at a position where the z-coordinate is 0, $k(z_a)$ represents a wavenumber of the wave at a position where the z-coordinate is $z_a$, $z_a$ represents a variable corresponding to the z-coordinate, and $k_x$, $k_{y1}$, and $k_{y2}$ respectively represent variables corresponding to wavenumbers with respect to x, $y_1$, and $y_2$ of the scattering field function, and

[Math. 6]

$$\tilde{\varphi}$$

represents the measurement data that has been Fourier transformed.

This allows the imaging device to image an object in the measurement area in the atmosphere with high accuracy by using the scattering field function derived from the measurement data obtained by the plurality of transmitters and the plurality of receivers arranged in a straight line.

For example, the imaging function is expressed as:

[Math. 7]

$$\rho(x, y, z)$$

$$= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} \tilde{\varphi}(k_x, k_{y_1}, k_{y_2}, k_1)$$

$$\cdot e^{i \int_0^z \sqrt{\left(\sqrt{k(z_a)^2 - k_{y_1}^2} + \sqrt{k(z_a)^2 - k_{y_2}^2}\right)^2 - k_x^2} \, dz_a} \, dk_x dk_{y_1} dk_{y_2} d\omega$$

where x, y, and z of the imaging function respectively represent an x-coordinate, a y-coordinate, and a z-coordinate of the imaging target position, and $\omega$ represents a variable corresponding to an angular frequency of the wave.

This allows the imaging device to image an object in the measurement area in the atmosphere with high accuracy by using the imaging function derived from the measurement data obtained by the plurality of transmitters and the plurality of receivers arranged in a straight line.

An imaging method according to one aspect of the present disclosure includes: transmitting, by each of a plurality of transmitters, a wave to a measurement area in an atmosphere; receiving, by each of a plurality of receivers, a scattered wave of the wave from the measurement area; and imaging an object in the measurement area using measurement data of the scattered wave. The imaging of the object includes: deriving, using the measurement data, a scattering field function that receives a transmission position of the wave and a reception position of the scattered wave as input and outputs an amount of the scattered wave at the reception position; deriving an imaging function that receives an imaging target position as input and outputs an image intensity at the imaging target position, and is defined using an amount output from the scattering field function in response to inputting the imaging target position into the scattering field function as the transmission position and the reception position; and imaging the object in the measurement area using the imaging function. The deriving of the scattering field function includes reflecting in the scattering field function that a wavenumber of the wave changes as a refractive index in the atmosphere changes with height in the atmosphere.

This allows deriving the scattering field function and the imaging function that reflects the atmospheric refractive index that varies with altitude. Accordingly, the imaging device is capable of imaging an object in the measurement area in the atmosphere with high accuracy.

Hereinafter, embodiments will be described with reference to the drawings. Each of the following embodiments describes a general or specific example. The numerical values, shapes, materials, elements, the arrangement and connection of the elements, steps, the order of the steps, etc., presented in the following embodiments are mere examples, and do not limit the scope of the claims.

In the following description, in particular the techniques or the like described in PTLs 2 to 5 given above may be referenced to as existing techniques. Although radio waves or electromagnetic waves such as microwaves are primarily assumed as the waves in the following description, the waves are not limited to radio waves or electromagnetic waves such as microwaves, and may be elastic waves or the like. Imaging based on scattering may be expressed as scattering tomography. Thus, the imaging device and imaging method described below may also be expressed as a scattering tomographic device and a scattering tomographic method, respectively.

[Embodiment]

An imaging device according to the present embodiment images an object in a measurement area using measurement data of scattered waves. Hereinafter, the imaging device according to the present embodiment, including techniques and theories serving as the basis of the imaging device, will be described in detail.

<1. Overview>

Scattering field theory is a theory used for imaging an object in a measurement area. For example, waves are transmitted from each of a plurality of transmission positions to the measurement area, and scattered waves from the measurement area are received at each of a plurality of reception positions. Measurement data of the scattered waves is obtained for each combination of transmission position and reception position. The object in the measurement area is then imaged using the measurement data. At this time, using the scattering field theory, the condition of scattering in the measurement area is calculated from the measurement data, and the object is imaged with high accuracy based on the condition of scattering.

However, when the measurement area is in the atmosphere, the density of the atmosphere differs depending on altitude, so waves transmitted to the measurement area may not travel straight. This phenomenon is also called atmospheric refraction. Therefore, when the measurement area is in the atmosphere, it is not easy to image an object using waves and scattered waves.

In view of this, the present disclosure describes a scattering field theory for imaging an object in the measurement area in the atmosphere. More specifically, first, a scattering field theory that does not take the atmospheric refractive index into consideration will be described, and then, a scattering field theory that does take the atmospheric refractive index into consideration will be described.

<2. Scattering Field Theory Without Consideration of Atmospheric Refraction>

In this chapter, a scattering field theory that does not take atmospheric refraction into consideration will be described.

<2-1. One-dimensional Array>

FIG. 1 is a conceptual diagram showing a one-dimensional multistatic array antenna. As illustrated in FIG. 1, by using two arbitrary elements from among n elements as a transmitting element and a receiving element, it is possible to receive signals with a high S/N ratio at a range of distances from a short distance to a long distance compared to a monostatic environment where the pair of transmitting and receiving elements is fixed. This considerably improves the quality of an ultimate image. Whereas, as a matter of course, the amount of data is increased to n times, and the time required for reconstruction is also shortened dramatically according to the theory described below.

Here, a situation is examined in which a radio wave radiated from point $P_1(x, y_1, z)$ is reflected at point $P(\xi, \eta, \zeta)$ and received at point $P_2(x, y_2, z)$ as illustrated in FIG. 1. In the case where point P is assumed to move in the entire region D, the signal received at point $P_2$ is represented by expression (2-1-1) below.

[Math. 8]

$$\varphi(x, y_1, y_2, z) = \iint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x - \xi)^2 + (y_1 - \eta)^2 + (z - \zeta)^2}$$

$$\rho_2 = \sqrt{(x - \xi)^2 + (y_2 - \eta)^2 + (z - \zeta)^2}$$

$$\cdots (2-1-1)$$

Here, $\varepsilon(\xi, \eta, \zeta)$ represents the function of the dielectric constant at point $P(\xi, \eta, \zeta)$ and corresponds to the reflectance at point $P(\xi, \eta, \zeta)$. Point $P(\xi, \eta, \zeta)$ corresponds to the reflection point. Note that $\varepsilon(\xi, \eta, \zeta)$ is unknown. It is assumed that the time factor is proportional to $\exp(-i\omega t)$. The kernel function in the integrand term of the above equation is represented as $\varphi$ in expression (2-1-2) below.

[Math. 9]

$$\phi = \frac{e^{ik\rho_1}}{\rho_1} \frac{e^{ik\rho_2}}{\rho_2}$$

$$\cdots (2-1-2)$$

Next, a partial differential equation that has expression (2-1-2) as an asymptotic solution is examined. Thus, calculation is performed while ignoring a high-order term with respect to $1/\rho$ obtained as a result of differentiation. Here, an abridged notation for differentiation is defined by expression (2-1-3).

[Math. 10]

$$\frac{\partial}{\partial t} \rightarrow \partial_t, \frac{\partial}{\partial x} \rightarrow \partial_x, \frac{\partial}{\partial y_1} \rightarrow \partial_{y_1}, \frac{\partial}{\partial y_2} \rightarrow \partial_{y_2}, \frac{\partial}{\partial z} \rightarrow \partial_z$$

$$\cdots (2-1-3)$$

Here, a partial differential equation that has expression (2-1-2) as an asymptotic solution at short wavelengths (at high frequency or when k is large) is examined. This solution to the partial differential equation may be regarded as almost an exact solution in imaging using microwaves. First, the result of differentiation of each order of $\varphi$ is represented by expression (2-1-4) below.

[Math. 11]

$$\partial_x \phi = ik(x-\xi)(\frac{1}{\rho_1}+\frac{1}{\rho_2})\phi + o(\rho^{-3}) \qquad \partial_{y_1}\phi = ik\frac{y_1-\eta}{\rho_1}\phi + o(\rho^{-3})$$

$$\partial_{y_2}\phi = ik\frac{y_2-\eta}{\rho_2}\phi + o(\rho^{-3}) \qquad \partial_z\phi = ik(z-\zeta)(\frac{1}{\rho_1}+\frac{1}{\rho_2})\phi + o(\rho^{-3})$$

$$\partial_x\partial_x\phi = (ik)^2(x-\xi)^2(\frac{1}{\rho_1}+\frac{1}{\rho_2})^2\phi + o(\rho^{-3})$$

$$\partial_z\partial_z\phi = (ik)^2(z-\zeta)^2(\frac{1}{\rho_1}+\frac{1}{\rho_2})^2\phi + o(\rho^{-3})$$

$$\partial_{y_1}\partial_{y_1}\phi = (ik)^2(\frac{y_1-\eta}{\rho_1})^2\phi + o(\rho^{-3})$$

$$\partial_{y_2}\partial_{y_2}\phi = (ik)^2(\frac{y_2-\eta}{\rho_2})^2\phi + o(\rho^{-3})$$

$$\cdots (2-1-4)$$

Hereinafter, the complexity o(*) is omitted. In accordance with the sum of four differential equations of the second order, expression (2-1-5) below is obtained.
[Math. 12]

$$\Delta_4\phi = (\partial_x^2 + \partial_{y_1}^2 + \partial_{y_2}^2 + \partial_z^2)\phi$$

$$= (ik)^2\{2 + 2\frac{(x-\xi)^2 + (z-\zeta)^2}{\rho_1\rho_2}\}\phi$$

$$\cdots (2-1-5)$$

Accordingly, expression (2-1-6) below is obtained from expression (2-1-5).
[Math. 13]

$$\{\Delta_4 - 2(ik)^2\}\phi = 2(ik)^2\frac{\rho_1^2 - (y_1-\eta)^2}{\rho_1\rho_2}\phi$$

$$= 2(ik)^2\frac{\rho_2^2 - (y_2-\eta)^2}{\rho_1\rho_2}\phi$$

$$\cdots (2-1-6)$$

By applying the operation of expression (2-1-6) two times, expression (2-1-7) below is obtained.
[Math. 14]

$$\{\Delta_4 - 2(ik)^2\}^2 \phi = 4(ik)^4 \frac{\{\rho_1{}^2 - (y_1 - \eta)^2\}\{\rho_2{}^2 - (y_2 - \eta)^2\}}{\rho_1{}^2 \rho_2{}^2} \phi$$

$$= 4(ik)^4 \{1 - (ik)^{-2} \partial_{y_1}{}^2\}\{1 - (ik)^{-2} \partial_{y_2}{}^2\} \phi$$

$$\cdot \cdot \cdot (2-1-7)$$

Expression (2-1-7) is summarized to obtain expression (2-1-8) below.
[Math. 15]

$$[\frac{1}{4}\{\Delta_4 - 2(ik)^2\}^2 - \partial_{y_1}{}^2 \partial_{y_2}{}^2 + (ik)^2 (\partial_{y_1}{}^2 + \partial_{y_2}{}^2) - (ik)^4] \phi = 0$$

$$\cdot \cdot \cdot (2-1-8)$$

Although expression (2-1-8) is derived assuming a steady state, it is easy to extend expression (2-1-8) to a non-steady state. Thus, variables are substituted as given by expression (2-1-9) below, using partial differential $\partial_t$ with respect to time t and using propagation velocity c of radio waves.
[Math. 16]

$$-ik \rightarrow \frac{1}{c} \partial_t$$

$$\cdot \cdot \cdot (2-1-9)$$

Through the process described above, an equation represented by expression (2-1-10) below is ultimately obtained.
[Math. 17]

$$\{\Delta_4{}^2 - \frac{4}{c^2}(\partial_t{}^2 \partial_x{}^2 + \partial_t{}^2 \partial_z{}^2) - 4\partial_{y_1}{}^2 \partial_{y_2}{}^2\} \phi = 0$$

$$\Delta_4 = \partial_x{}^2 + \partial_{y_1}{}^2 + \partial_{y_2}{}^2 + \partial_z{}^2$$

$$\cdot \cdot \cdot (2-1-10)$$

Expression (2-1-10) described above is a partial differential equation that has φ in expression (2-1-2) as a solution. By applying differentiation to the kernel of expression (2-1-1),

[Math. 18]

$$\varphi$$

of expression (2-1-1) also satisfies the partial differential equation described above. This equation is a four-dimensional pseudo wave equation configured by five variables (t, x, $y_1$, $y_2$, z).

Next, this equation is solved by Fourier transform. First,

[Math. 19]

$$\varphi$$

is subjected to a multiplex Fourier transform with respect to t, x, $y_1$, $y_2$ as given by expression (2-1-11) below.

[Math. 20]

$$\tilde{\varphi}(k_x, k_{y_1}, k_{y_2}, z, \omega) = \int_{-\infty}^{\infty} e^{i\omega t} dt \int_{-\infty}^{\infty} \int_{-\infty}^{\infty} \int_{-\infty}^{\infty} e^{i(k_x x + k_{y_1} y_1 + k_{y_2} y_2)} \varphi(x, y_1, y_2, z, t) dx dy_1 dy_2$$

$$\cdots (2-1-1\ 1)$$

When the differential with respect to z is expressed as $D_z$, expression (2-1-12) below is obtained from expressions (2-1-10) and (2-1-11).
[Math. 21]

$$\{(D_z^2 - k_x^2 - k_{y_1}^2 - k_{y_2}^2)^2 + 4k^2(D_z^2 - k_x^2) - 4k_{y_1}^2 k_{y_2}^2\}\tilde{\varphi} = 0$$

$$\cdots (2-1-1\ 2)$$

Here, the relationship of $\omega = ck$ is used. Four basic solutions to this equation are expressed as given by expression (2-1-13) below.
[Math. 22]

$$E_1 = e^{i\{\sqrt{(\sqrt{k^2 - k_{y_1}^2} + \sqrt{k^2 - k_{y_2}^2})^2 - k_x^2}\}z}$$

$$E_2 = e^{-i\{\sqrt{(\sqrt{k^2 - k_{y_1}^2} + \sqrt{k^2 - k_{y_2}^2})^2 - k_x^2}\}z}$$

$$E_3 = e^{i\{\sqrt{(\sqrt{k^2 - k_{y_1}^2} - \sqrt{k^2 - k_{y_2}^2})^2 - k_x^2}\}z}$$

$$E_4 = e^{-i\{\sqrt{(\sqrt{k^2 - k_{y_1}^2} - \sqrt{k^2 - k_{y_2}^2})^2 - k_x^2}\}z}$$

$$\cdots (2-1-1\ 3)$$

Considering the facts that the time factor is $e^{-i\omega t}$, the phase is added using the path of radiated radio waves, and radio waves reflected off the object are bounced off toward a measurement surface (measurement plane), $E_1$ is the unique meaningful solution. Accordingly, expression (2-1-14) below is obtained.
[Math. 23]

$$\tilde{\varphi}(k_x, k_{y_1}, k_{y_2}, z, k) = a(k_x, k_{y_1}, k_{y_2}, k) e^{i\{\sqrt{(\sqrt{k^2 - k_{y_1}^2} + \sqrt{k^2 - k_{y_2}^2})^2 - k_x^2}\}z}$$

$$\cdots (2-1-1\ 4)$$

By substituting z = 0 in expression (2-1-14), $a(k_x, k_{y_1}, k_{y_2}, k)$ is obtained as given by expression (2-1-15) below.
[Math. 24]

$$a(k_x, k_{y_1}, k_{y_2}, k) = \tilde{\varphi}(k_x, k_{y_1}, k_{y_2}, 0, k)$$

$$\cdots (2-1-1\ 5)$$

Ultimately,

[Math. 25]

$$\varphi$$

is obtained as given by expression (2-1-16) below.
[Math. 26]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} dk_x dk_{y_1} dk_{y_2}$$

$$\cdots (2-1-16)$$

By applying a limit operation ($y_2 \to y_1 = y$) to expression (2-1-16) on condition that k and z are fixed and integrating the result with respect to k, the imaging function is obtained as given by expression (2-1-17) below.
[Math. 27]

$$\varphi(x, y, y, z, k) = \lim_{y_2 \to y_1 = y} [\varphi(x, y, y_2, z, k)]$$

$$= \lim_{y_2 \to y_1 = y} [\frac{1}{(2\pi)^3} \int_{-\infty}^{\infty} \int_{-\infty}^{\infty} \int_{-\infty}^{\infty} e^{-i(k_x x + k_{y_1} y + k_{y_2} y_2)} a(k_x, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} dk_x dk_{y_1} dk_{y_2}]$$

$$\rho(x, y, z) = \int_{0}^{\infty} \varphi(x, y, y, z, k) dk$$

$$\cdots (2-1-17)$$

As described above, it becomes possible to analytically solve a multistatic inverse scattering problem with a one-dimensional array.

<2-2. Two-dimensional Array>

This section describes the theory for a case pertaining to a two-dimensional array.
FIG. 2 is a conceptual diagram showing the relationship between a transmission point and a reception point in a plane. As illustrated in FIG. 2, a microwave radiated from point $P_1$ is reflected at point P on a target and received at point $P_2$. Points $P_1$ and $P_2$ move to arbitrary points on a grid (two-dimensional array antenna) in a plane. Under this assumption, there are $n^4$ different microwave paths passing through point P on the target. This large number of paths considerably contributes to an improvement in the quality of an ultimate image. A method for processing such complex data to obtain an image will be described below.
For example, as illustrated in FIG. 2, the radio wave radiated from point $P_1(x_1, y_1, z)$ is reflected at point $P(\xi, \eta, \zeta)$ and received at point $P_2(x_2, y_2, z)$. When point P is assumed to move in the entire region D, a signal received at $P_2$ is expressed by the following expression.
[Math. 28]

$$\varphi(x_1, y_1, x_2, y_2, z) = \iiint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x_1 - \xi)^2 + (y_1 - \eta)^2 + (z - \zeta)^2}$$

$$\rho_2 = \sqrt{(x_2 - \xi)^2 + (y_2 - \eta)^2 + (z - \zeta)^2}$$

$$\cdots (2-2-1)$$

It is assumed here that the time factor is proportional to exp(-iωt). The kernel function in the integrand term of the above expression is expressed as given by expression (2-2-2) below.
[Math. 29]

$$\phi = \frac{e^{ik\rho_1}}{\rho_1} \frac{e^{ik\rho_2}}{\rho_2}$$

$$\cdots (2-2-2)$$

Next, a partial differential equation that has expression (2-2-2) as an asymptotic solution at short wavelengths is examined. Thus, calculation is performed while ignoring a high-order term with respect to 1/ρ obtained as a result of differentiation. Here, an abridged notation for differentiation is defined by expression (2-2-3).
[Math. 30]

$$\frac{\partial}{\partial t} \to \partial_t, \frac{\partial}{\partial x_1} \to \partial_{x_1}, \frac{\partial}{\partial x_2} \to \partial_{x_2}, \frac{\partial}{\partial y_1} \to \partial_{y_1}, \frac{\partial}{\partial y_2} \to \partial_{y_2}, \frac{\partial}{\partial z} \to \partial_z$$

$$\cdots (2-2-3)$$

Using expression (2-2-3), differentiation of each order of the kernel function is expressed as given by expression (2-2-4) below.
[Math. 31]

$$\partial_{x_1}\phi = ik\frac{x_1-\xi}{\rho_1}\phi + o(\rho^{-3}) \qquad \partial_{x_2}\phi = ik\frac{x_2-\xi}{\rho_2}\phi + o(\rho^{-3})$$

$$\partial_{y_1}\phi = ik\frac{y_1-\eta}{\rho_1}\phi + o(\rho^{-3}) \qquad \partial_{y_2}\phi = ik\frac{y_2-\eta}{\rho_2}\phi + o(\rho^{-3})$$

$$\partial_z\phi = ik(z-\zeta)(\frac{1}{\rho_1}+\frac{1}{\rho_2})\phi + o(\rho^{-3})$$

$$\partial_{x_1}\partial_{x_1}\phi = (ik)^2\left(\frac{x_1-\xi}{\rho_1}\right)^2\phi + o(\rho^{-3})$$

$$\partial_{y_1}\partial_{y_1}\phi = (ik)^2\left(\frac{y_1-\eta}{\rho_1}\right)^2\phi + o(\rho^{-3})$$

$$\partial_{x_2}\partial_{x_2}\phi = (ik)^2\left(\frac{x_2-\xi}{\rho_2}\right)^2\phi + o(\rho^{-3})$$

$$\partial_{y_2}\partial_{y_2}\phi = (ik)^2\left(\frac{y_2-\eta}{\rho_2}\right)^2\phi + o(\rho^{-3})$$

$$\partial_z\partial_z\phi = (ik)^2(z-\zeta)^2(\frac{1}{\rho_1}+\frac{1}{\rho_2})^2\phi + o(\rho^{-3})$$

$$\cdot\cdot\cdot(2-2-4)$$

Hereinafter, the complexity o(*) is omitted. In accordance with the sum of five differential equations of the second order, expression (2-2-5) below is obtained.
[Math. 32]

$$\Delta_5\phi = (\partial_{x_1}^{\,2} + \partial_{y_1}^{\,2} + \partial_{x_2}^{\,2} + \partial_{y_2}^{\,2} + \partial_z^{\,2})\phi$$

$$= (ik)^2\{2+2\frac{(z-\zeta)^2}{\rho_1\rho_2}\}\phi$$

$$\cdot\cdot\cdot(2-2-5)$$

Accordingly, expression (2-2-6) below is obtained from expression (2-2-5).
[Math. 33]

$$\{\Delta_5 - 2(ik)^2\}\phi = 2(ik)^2 \frac{(z-\xi)^2}{\rho_1\rho_2}\phi$$

$$= 2(ik)^2 \frac{\rho_1^2 - (x_1-\xi)^2 - (y_1-\eta)^2}{\rho_1\rho_2}\phi$$

$$= 2(ik)^2 \frac{\rho_2^2 - (x_2-\xi)^2 - (y_2-\eta)^2}{\rho_1\rho_2}\phi$$

$$\cdot\cdot\cdot(2-2-6)$$

By applying the operation of expression (2-2-6) two times, expression (2-2-7) below is obtained.
[Math. 34]

$$\{\Delta_5 - 2(ik)^2\}^2\phi$$

$$= 4(ik)^4 \frac{\{\rho_1^2 - (x_1-\xi)^2 - (y_1-\eta)^2\}\{\rho_2^2 - (x_2-\xi)^2 - (y_2-\eta)^2\}}{\rho_1^2\rho_2^2}\phi$$

$$= 4(ik)^4 \{1 - (ik)^{-2}\partial_{x_1}^2 - (ik)^{-2}\partial_{y_1}^2\}\{1 - (ik)^{-2}\partial_{x_2}^2 - (ik)^2\partial_{y_2}^2\}\phi$$

$$\cdot\cdot\cdot(2-2-7)$$

Expression (2-2-7) is summarized to obtain expression (2-2-8) below.
[Math. 35]

$$[\frac{1}{4}\{\Delta_5 - 2(ik)^2\}^2 - (\partial_{x_1}^2 + \partial_{y_1}^2)(\partial_{x_2}^2 + \partial_{y_2}^2)$$

$$+ (ik)^2(\partial_{x_1}^2 + \partial_{y_1}^2 + \partial_{x_2}^2 + \partial_{y_2}^2) - (ik)^4]\phi = 0$$

$$\cdot\cdot\cdot(2-2-8)$$

Although expression (2-2-8) is derived assuming a steady state, it is easy to extend expression (2-2-8) to a non-steady state. Thus, variables are substituted as given by expression (2-2-9) below.
[Math. 36]

$$-ik \rightarrow \frac{1}{c}\partial t$$

$$\cdot\cdot\cdot(2-2-9)$$

By this substitution, expression (2-2-8) is converted into expression (2-2-10) below that includes time.
[Math. 37]

$$\{\Delta_5{}^2 - \frac{4}{c^2}\partial_t{}^2\partial_z{}^2 - 4(\partial_{x_1}{}^2 + \partial_{y_1}{}^2)(\partial_{x_2}{}^2 + \partial_{y_2}{}^2)\}\phi = 0$$

$$\Delta_5 = \partial_{x_1}{}^2 + \partial_{y_1}{}^2 + \partial_{x_2}{}^2 + \partial_{y_2}{}^2 + \partial_z{}^2$$

$$\cdots (2-2-10)$$

Expression (2-2-10) described above is a partial differential equation that has the kernel function given by expression (2-2-2) as a solution, and by applying differentiation to the kernel of expression (2-2-1),

[Math. 38]

$$\varphi$$

of expression (2-2-1) also satisfies the partial differential equation described above. This equation is a five-dimensional pseudo wave equation configured by six variables (t, $x_1$, $y_1$, $x_2$, $y_2$, z).

Next, this equation is solved by Fourier transform. First,

[Math. 39]

$$\varphi$$

is subjected to a multiplex Fourier transform with respect to t, $x_1$, $y_1$, $x_2$, and $y_2$ as given by expression (2-2-11) below.

[Math. 40]

$$\tilde{\varphi}(k_{x_1}, k_{y_1}, k_{x_2}, k_{y_2}, z, \omega)$$

$$= \int_{-\infty}^{\infty} e^{i\omega t} dt \int_{-\infty}^{\infty}\int_{-\infty}^{\infty}\int_{-\infty}^{\infty}\int_{-\infty}^{\infty} e^{i(k_{x_1}x_1 + k_{y_1}y_1)} e^{i(k_{x_2}x_2 + k_{y_2}y_2)} \varphi(x_1, y_1, x_2, y_2, z, t) dx_1 dy_1 dx_2 dy_2$$

$$\cdots (2-2-11)$$

When the differential with respect to z is expressed as $D_z$, expression (2-2-12) below is obtained from expressions (2-2-10) and (2-2-11).

[Math. 41]

$$\{(D_z{}^2 - k_{x_1}{}^2 - k_{y_1}{}^2 - k_{x_2}{}^2 - k_{y_2}{}^2)^2 + 4k^2 D_z{}^2 - 4(k_{x_1}{}^2 + k_{y_1}{}^2)(k_{x_2}{}^2 + k_{y_2}{}^2)\}\tilde{\varphi} = 0$$

$$\cdots (2-2-12)$$

Here, the relationship of $\omega$ = ck is used. Four basic solutions to this equation are expressed as given by expression (2-2-13) below.

[Math. 42]

$$E_1 = e^{i\left\{\sqrt{k^2 - k_{x_1}^2 - k_{y_1}^2} + \sqrt{k^2 - k_{x_2}^2 - k_{y_2}^2}\right\}z}$$

$$E_2 = e^{-i\left\{\sqrt{k^2 - k_{x_1}^2 - k_{y_1}^2} + \sqrt{k^2 - k_{x_2}^2 - k_{y_2}^2}\right\}z}$$

$$E_3 = e^{i\left\{\sqrt{k^2 - k_{x_1}^2 - k_{y_1}^2} - \sqrt{k^2 - k_{x_2}^2 - k_{y_2}^2}\right\}z}$$

$$E_4 = e^{-i\left\{\sqrt{k^2 - k_{x_1}^2 - k_{y_1}^2} - \sqrt{k^2 - k_{x_2}^2 - k_{y_2}^2}\right\}z}$$

$$\cdots (2-2-1\ 3)$$

Considering the facts that the time factor is $e^{-i\omega t}$, the phase is added using the path of radiated radio waves, and radio waves reflected off the object are bounced off toward a measurement plane, $E_1$ is the unique meaningful solution. Accordingly, expression (2-2-14) below is obtained.
[Math. 43]

$$\tilde{\varphi}(k_{x_1}, k_{y_1}, k_{x_2}, k_{y_2}, z, k) = a(k_{x_1}, k_{y_1}, k_{x_2}, k_{y_2}, k)e^{i\left(\sqrt{k^2 - k_{x_1}^2 - k_{y_1}^2} + \sqrt{k^2 - k_{x_2}^2 - k_{y_2}^2}\right)z}$$

$$\cdots (2-2-1\ 4)$$

By substituting z = 0 in expression (2-2-14), $a(k_{x1}, k_{y1}, k_{x2}, k_{y2}, k)$ is obtained as given by expression (2-2-15) below.
[Math. 44]

$$a(k_{x_1}, k_{y_1}, k_{x_2}, k_{y_2}, k) = \tilde{\varphi}(k_{x_1}, k_{y_1}, k_{x_2}, k_{y_2}, 0, k)$$

$$\cdots (2-2-1\ 5)$$

From the above,

$$[\text{Math. }45]$$

$$\varphi$$

is obtained as given by expression (2-2-16) below.
[Math. 46]

$$\varphi(x_1, y_1, x_2, y_2, z, k)$$

$$= \frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{y_1}y_1)} e^{-i(k_{x_2}x_2 + k_{y_2}y_2)} e^{i\left(\sqrt{k^2 - k_{x_1}^2 - k_{y_1}^2} + \sqrt{k^2 - k_{x_2}^2 - k_{y_2}^2}\right)z}$$

$$\cdot a(k_{x_1}, k_{y_1}, k_{x_2}, k_{y_2}, k)dk_{x_1}dk_{y_1}dk_{x_2}dk_{y_2}$$

$$\cdots (2-2-1\ 6)$$

Next, under the condition where k and z are fixed, by applying a limit operation ($y_1 \to y$ and $y_2 \to y$) to expression (2-2-16), we obtain expression (2-2-17).
[Math. 47]

$$\Phi(x,y,z,k) = \varphi(x,y,x,y,z,k)$$

$$= \underset{\substack{x_2 \to x_1 = x \\ y_2 \to y_1 = y}}{Lim} [\varphi(x_1, y_1, x_2, y_2, z, k)]$$

$$= \underset{\substack{x_2 \to x_1 = x \\ y_2 \to y_1 = y}}{Lim} [\frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{y_1}y_1)} e^{-i(k_{x_2}x_2 + k_{y_2}y_2)} e^{iz\left(\sqrt{k^2 - k_{x_1}^2 - k_{y_1}^2} + \sqrt{k^2 - k_{x_2}^2 - k_{y_2}^2}\right)}$$

$$\cdot a(k_{x_1}, k_{y_1}, k_{x_2}, k_{y_2}, k) dk_{x_1} dk_{y_1} dk_{x_2} dk_{y_2}]$$

$$\cdot\cdot\cdot(2-2-17)$$

Next, expression (2-2-17) is integrated with respect to k to obtain expression (2-2-18) below as an imaging function.
[Math. 48]

$$\rho(x,y,z) = \int_0^{\infty} \Phi(x,y,z,k)dk = \int_0^{\infty} \varphi(x,y,x,y,z,k)dk$$

$$= \underset{\substack{x_2 \to x_1 = x \\ y_2 \to y_1 = y}}{Lim} [\int_0^{\infty} \varphi(x_1, y_1, x_2, y_2, z, k)dk]$$

$$= \underset{\substack{x_2 \to x_1 = x \\ y_2 \to y_1 = y}}{Lim} [\frac{1}{(2\pi)^4} \int_0^{\infty}\int_{-\infty}^{\infty}\int_{-\infty}^{\infty}\int_{-\infty}^{\infty}\int_{-\infty}^{\infty} e^{-i(k_{x_1}x_1 + k_{y_1}y_1)} e^{-i(k_{x_2}x_2 + k_{y_2}y_2)} e^{iz\left(\sqrt{k^2 - k_{x_1}^2 - k_{y_1}^2} + \sqrt{k^2 - k_{x_2}^2 - k_{y_2}^2}\right)}$$

$$\cdot a(k_{x_1}, k_{y_1}, k_{x_2}, k_{y_2}, k) dk_{x_1} dk_{y_1} dk_{x_2} dk_{y_2} dk]$$

$$\cdot\cdot\cdot(2-2-18)$$

In expression (2-2-18), the integration with respect to $k_{x1}$, $k_{y1}$, $k_{x2}$, and $k_{y2}$ is in the form of a Fourier transform and suitable for processing performed by a calculator. On the other hand, the term exp(iz...) of the integrand is not in the form of Fourier transform. Thus, ordinary integration is performed with respect to k while specifying, for example, the value of z. Alternatively, in order to reduce the calculation time, expression (2-2-18) may be modified so as to express the whole using only a Fourier transform.
For example, the coefficient of iz in the term exp(iz...) of expression (2-2-17) is expressed by expression (2-2-19) below using a new variable u.
[Math. 49]

$$u = \sqrt{k^2 - k_{x_1}^2 - k_{y_1}^2} + \sqrt{k^2 - k_{x_2}^2 - k_{y_2}^2}$$

$$\cdot\cdot\cdot(2-2-19)$$

By rationalizing the right-hand side of expression (2-2-19), expression (2-2-20) below is obtained.
[Math. 50]

$$\frac{k_{x_2}^{\ 2}+k_{y_2}^{\ 2}-k_{x_1}^{\ 2}-k_{y_1}^{\ 2}}{u}=\sqrt{k^2-k_{x_1}^{\ 2}-k_{y_1}^{\ 2}}-\sqrt{k^2-k_{x_2}^{\ 2}-k_{y_2}^{\ 2}}$$

$$\cdots(2-2-20)$$

By solving each square root from the two expressions including expressions (2-2-19) and (2-2-20), expression (2-2-21) below is obtained.
[Math. 51]

$$2\sqrt{k^2-k_{x_1}^{\ 2}-k_{y_1}^{\ 2}}=u+\frac{k_{x_2}^{\ 2}+k_{y_2}^{\ 2}-k_{x_1}^{\ 2}-k_{y1}^{\ 2}}{u}$$

$$2\sqrt{k^2-k_{x_2}^{\ 2}-k_{y_2}^{\ 2}}=u-\frac{k_{x_2}^{\ 2}+k_{y_2}^{\ 2}-k_{x_1}^{\ 2}-k_{y1}^{\ 2}}{u}$$

$$\cdots(2-2-21)$$

Accordingly, k is expressed as given by expression (2-2-22) below.
[Math. 52]

$$k=\frac{1}{2}\sqrt{u^2+\frac{(k_{x_2}^{\ 2}+k_{y_2}^{\ 2}-k_{x_1}^{\ 2}-k_{y_1}^{\ 2})^2}{u^2}+2(k_{x_2}^{\ 2}+k_{y_2}^{\ 2}+k_{x_1}^{\ 2}+k_{y_1}^{\ 2})}$$

$$\cdots(2-2-22)$$

Next, expression (2-2-23) below is obtained by differentiation of both sides of expression (2-2-19) with respect to k and u.
[Math. 53]

$$du=kdk\left(\frac{1}{\sqrt{k^2-k_{x_1}^{\ 2}-k_{y_1}^{\ 2}}}+\frac{1}{\sqrt{k^2-k_{x_2}^{\ 2}-k_{y_2}^{\ 2}}}\right)$$

$$\cdots(2-2-23)$$

By solving dk from expression (2-2-23), expression (2-2-24) below is obtained.
[Math. 54]

$$dk=\frac{1}{ku}\sqrt{k^2-k_{x_1}^{\ 2}-k_{y_1}^{\ 2}}\sqrt{k^2-k_{x_2}^{\ 2}-k_{y_2}^{\ 2}}\,du$$

$$\cdots(2-2-24)$$

In summary, expression (2-2-18) is converted as given by expression (2-2-25) below.
[Math. 55]

18

$$\rho(x,y,z) = \int_0^\infty \Phi(x,y,z,k)dk = \int_0^\infty \varphi(x,y,x,y,z,k)dk$$

$$= \lim_{\substack{x_2 \to x_1 = x \\ y_2 \to y_1 = y}} [\int_0^\infty \varphi(x_1,y_1,x_2,y_2,z,k)dk]$$

$$= \lim_{\substack{x_2 \to x_1 = x \\ y_2 \to y_1 = y}} [\frac{1}{(2\pi)^4} \int_0^\infty \int_{-\infty}^\infty \int_{-\infty}^\infty \int_{-\infty}^\infty \int_{-\infty}^\infty e^{-i(k_{x_1}x_1 + k_{y_1}y_1)} e^{-i(k_{x_2}x_2 + k_{y_2}y_2)} e^{izu}$$

$$\cdot a(k_{x_1}, k_{y_1}, k_{x_2}, k_{y_2}, k)dk_{x_1}dk_{y_1}dk_{x_2}dk_{y_2}dk]$$

$$\cdots (2-2-25)$$

<2-3. Semi-two-dimensional Array>

FIG. 3 is a conceptual diagram showing an example of coordinates relating to a semi-two-dimensional array antenna. In this example, the semi-two-dimensional array antenna is configured by two linear array antennas including single-row transmitting array antenna TA and single-row receiving array antenna RA. Such a semi-two-dimensional array antenna is also referred to as an S-Array (super-array) or an S-Array multistatic antenna.

Transmitting array antenna TA includes n transmitting antenna elements T. Receiving array antenna RA includes n receiving antenna elements R. The x coordinate of transmitting array antenna TA is expressed as $x_1$, the x coordinate of receiving array antenna RA is expressed as $x_2$, and the distance in the x-axis direction between transmitting array antenna TA and receiving array antenna RA is expressed as d. This configuration is capable of obtaining $n^2$ sets of time-series data, each being an arbitrary combination of n transmitting antenna elements and n receiving antenna elements at each point x in the scanning direction.

This section describes the theory for imaging an object from data obtained by a semi-two-dimensional array antenna as illustrated in FIG. 3. First, expression (2-2-10) relating to a two-dimensional array is used as the starting point for examination. Expression (2-3-1) below is the same operator as expression (2-2-10).
[Math. 56]

$$\{\Delta_5^2 - \frac{4}{c^2}\partial_t^2\partial_z^2 - 4(\partial_{x_1}^2 + \partial_{y_1}^2)(\partial_{x_2}^2 + \partial_{y_2}^2)\}\varphi = 0$$

$$\Delta_5 = \partial_{x_1}^2 + \partial_{y_1}^2 + \partial_{x_2}^2 + \partial_{y_2}^2 + \partial_z^2$$

$$\cdots (2-3-1)$$

Also,

$$[\text{Math. 57}]$$

$$\varphi$$

with respect to t, $x_1$, $y_1$, and $y_2$ is expressed as given by expression (2-3-2) below.
[Math. 58]

$$\tilde{\varphi}(k_{x_1}, k_{y_1}, x_2, k_{y_2}, z, k)$$

$$= \int_{-\infty}^{\infty} e^{ickt} dt \int_{-\infty}^{\infty} \int_{-\infty}^{\infty} \int_{-\infty}^{\infty} e^{i(k_{x_1}x_1 + k_{y_1}y_1 + k_{y_2}y_2)} \varphi(x_1, y_1, x_2, y_2, z, t) dx_1 dy_1 dy_2$$

$$\cdots (2-3-2)$$

In the following description, variable $x_2$ is expressed as u. Expression (2-3-3) below is obtained by Fourier transform of both sides of expression (2-3-1) with respect to t, $x_1$, $y_1$, and $y_2$.
[Math. 59]

$$\left\{ \left( \partial_u^2 + \partial_z^2 - k_{x_1}^2 - k_{y_1}^2 - k_{y_2}^2 \right)^2 + 4k^2 \partial_z^2 + 4(k_{x_1}^2 + k_{y_1}^2)(\partial_u^2 - k_{y_2}^2) \right\} \tilde{\varphi} = 0$$

$$\cdots (2-3-3)$$

A solution to expression (2-3-3) described above, which is the two-dimensional partial differential equation with respect to u and z, is assumed as given by expression (2-3-4) below.
[Math. 60]

$$\tilde{\varphi} \propto e^{s_3 u} e^{s_4 z}$$

$$\cdots (2-3-4)$$

Here, $s_3$ and $s_4$ are functions with respect to $k_{x1}$, $k_{y1}$, $k_{y2}$, and k as given by expression (2-3-5) below. Stated differently, $s_3$ and $s_4$ are constants defined by $k_{x1}$, $k_{y1}$, $k_{y2}$, and k.
[Math. 61]

$$s_3 = s_3(k_{x_1}, k_{y_1}, k_{y_2}, k)$$

$$s_4 = s_4(k_{x_1}, k_{y_1}, k_{y_2}, k)$$

$$\cdots (2-3-5)$$

By substituting expression (2-3-4) in expression (2-3-3), expression (2-3-6) below is obtained.
[Math. 62]

$$\left( s_3^2 + s_4^2 - k_{x_1}^2 - k_{y_1}^2 - k_{y_2}^2 \right)^2 + 4k^2 s_4^2 + 4(k_{x_1}^2 + k_{y_1}^2)(s_3^2 - k_{y_2}^2) = 0$$

$$\cdots (2-3-6)$$

However, $s_3$ and $s_4$ cannot be determined from only this algebraic equation. Next, expression (2-3-4) is changed into expression (2-3-7) below.
[Math. 63]

$$\tilde{\varphi}(k_{x_1}, k_{y_1}, u, k_{y_2}, z, k) = b(k_{x_1}, k_{y_1}, k_{y_2}, k) e^{s_3 u} e^{s_4 z}$$

$$\cdots (2-3-7)$$

By inverse Fourier transform of expression (2-3-7) with respect to $k_{x1}$, $k_{y1}$, and $k_{y2}$ and application of the result to $u \rightarrow x_2$, expression (2-3-8) below is obtained.

[Math. 64]

$$\varphi(x_1, y_1, x_2, y_2, z, k)$$

$$= \frac{1}{(2\pi)^3} \int_{-\infty}^{\infty}\int_{-\infty}^{\infty}\int_{-\infty}^{\infty} e^{-i(k_{x_1}x_1+k_{y_1}y_1+k_{y_2}y_2)} b(k_{x_1}, k_{y_1}, k_{y_2}, k) e^{s_3 x_2} e^{s_4 z} dk_{x_1} dk_{y_1} dk_{y_2}$$

$$\cdots (2-3-8)$$

By applying $x_2 = x_1 = x$ to expression (2-3-8), expression (2-3-9) below is obtained.
[Math. 65]

$$\varphi(x, y_1, x, y_2, z, k)$$

$$= \frac{1}{(2\pi)^3} \int_{-\infty}^{\infty}\int_{-\infty}^{\infty}\int_{-\infty}^{\infty} e^{-i(k_{x_1}x+k_{y_1}y_1+k_{y_2}y_2)} b(k_{x_1}, k_{y_1}, k_{y_2}, k) e^{s_3 x} e^{s_4 z} dk_{x_1} dk_{y_1} dk_{y_2}$$

$$= \frac{1}{(2\pi)^3} \int_{-\infty}^{\infty}\int_{-\infty}^{\infty}\int_{-\infty}^{\infty} e^{-i\{(k_{x_1}+is_3)x+k_{y_1}y_1+k_{y_2}y_2\}} b(k_{x_1}, k_{y_1}, k_{y_2}, k) e^{s_4 z} dk_{x_1} dk_{y_1} dk_{y_2}$$

$$= \frac{1}{(2\pi)^3} \int_{-\infty}^{\infty}\int_{-\infty}^{\infty}\int_{-\infty}^{\infty} e^{-i(k_x x+k_{y_1}y_1+k_{y_2}y_2)} b(k_{x_1}, k_{y_1}, k_{y_2}, k) e^{s_4 z} \left(\frac{dk_{x_1}}{dk_x}\right) dk_x dk_{y_1} dk_{y_2}$$

$$\cdots (2-3-9)$$

Here, $k_x$ is expressed as given by expression (2-3-10) below.
[Math. 66]

$$k_x = k_{x_1} + is_3$$

$$\cdots (2-3-10)$$

Expression (2-3-9) described above is supposed to agree with expression (2-1-16) because it agrees with the solution to the scattering field equation for the one-dimensional array. Expression (2-3-11) below is the same as expression (2-1-16).
[Math. 67]

$$\varphi(x, y_1, y_2, z, k)$$

$$= \frac{1}{(2\pi)^3} \int_{-\infty}^{\infty}\int_{-\infty}^{\infty}\int_{-\infty}^{\infty} e^{-i(k_x x+k_{y_1}y_1+k_{y_2}y_2)} a(k_x, k_{y_1}, k_{y_2}, k)$$

$$\cdot e^{i\{\sqrt{(\sqrt{k^2-k_{y_1}^2}+\sqrt{k^2-k_{y_2}^2})^2-k_x^2}\}z} dk_x dk_{y_1} dk_{y_2}$$

$$\cdots (2-3-11)$$

By comparing expressions (2-3-9) and (2-3-11), expression (2-3-12) below is obtained.
[Math. 68]

$$b(k_{x_1}, k_{y_1}, k_{y_2}, k)\left(\frac{dk_{x_1}}{d(k_{x_1} + is_3)}\right) = a(k_{x_1} + is_3, k_{y_1}, k_{y_2}, k)$$

$$s_4 = i\sqrt{(\sqrt{k^2 - k_{y_1}^2} + \sqrt{k^2 - k_{y_2}^2})^2 - (k_{x_1} + is_3)^2}$$

$$\cdots (2-3-1\,2)$$

The second equation given by expression (2-3-12) is raised to the second power to obtain expression (2-3-13) below.
[Math. 69]

$$s_4^{\;2} + s_3^{\;2} = 2ik_{x_1}s_3 + k_{x_1}^{\;2} - \left(\sqrt{k^2 - k_{y_1}^{\;2}} + \sqrt{k^2 - k_{y_2}^{\;2}}\right)^2$$

$$\cdots (2-3-1\,3)$$

By substituting expression (2-3-13) in expression (2-3-6), expression (2-3-14) below is obtained.
[Math. 70]

$$\left\{2ik_{x_1}s_3 - k_{y_1}^{\;2} - k_{y_2}^{\;2} - \left(\sqrt{k^2 - k_{y_1}^{\;2}} + \sqrt{k^2 - k_{y_2}^{\;2}}\right)^2\right\}^2$$

$$+ 4k^2\left\{-\left(\sqrt{k^2 - k_{y_1}^{\;2}} + \sqrt{k^2 - k_{y_2}^{\;2}}\right)^2 + (k_{x_1} + is_3)^2\right\}$$

$$+ 4(k_{x_1}^{\;2} + k_{y_1}^{\;2})(s_3^{\;2} - k_{y_2}^{\;2}) = 0$$

$$\cdots (2-3-1\,4)$$

Expression (2-3-14) is summarized to obtain expression (2-3-15) below.
[Math. 71]

$$(k^2 - k_{y_1}^{\;2})s_3^{\;2} + 2\left(ik_{x_1}\sqrt{k^2 - k_{y_1}^{\;2}}\sqrt{k^2 - k_{y_2}^{\;2}}\right)s_3 - k_{x_1}^{\;2}(k^2 - k_{y_2}^{\;2}) = 0$$

$$\cdots (2-3-1\,5)$$

Since the solution to this equation is a multiple root, the solution expressed as given by expression (2-3-16) is uniquely obtained.
[Math. 72]

$$s_3 = \frac{-ik_{x_1}\sqrt{k^2 - k_{y_2}^{\;2}}}{\sqrt{k^2 - k_{y_1}^{\;2}}}$$

$$\cdots (2-3-1\,6)$$

In accordance with expressions (2-3-12) and (2-3-16) obtained through the above-described process, $s_3$ and $s_4$ are obtained analytically. Then, the scattering field function is obtained from expression (2-3-8) as expressed by expression (2-3-17) below.
[Math. 73]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} b(k_{x_1}, k_{y_1}, k_{y_2}, k) e^{s_3 x_2} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} a(k_{x_1} + is_3, k_{y_1}, k_{y_2}, k)$$

$$\cdot \left( \frac{d(k_{x_1} + is_3)}{dk_{x_1}} \right) e^{s_3 x_2} e^{s_4 z} dk_{x_1} dk_{y_1} dk_{y_2}$$

$$s_3 = \frac{-i k_{x_1} \sqrt{k^2 - k_{y_2}^2}}{\sqrt{k^2 - k_{y_1}^2}}$$

$$s_4 = i \sqrt{(\sqrt{k^2 - k_{y_1}^2} + \sqrt{k^2 - k_{y_2}^2})^2 - (k_{x_1} + is_3)^2}$$

$$\cdot \cdot \cdot (2 - 3 - 1\,7)$$

Next, connecting measurement data $\Phi(x_1, y_1,$ and $y_2, k)$ with $a(k_{x1}, k_{y1}, k_{y2}, k)$ is examined. By defining $k_x = k_{x1} + is_3$ and substituting $z = 0$ and $x_2 = x_1 + d$ in expression (2-3-17), an equation as given by expression (2-3-18) holds true. Here, $\Phi(x_1, y_1,$ and $y_2, k)$ represents measurement data on transmission point $(x_1, y_1, 0)$, reception point $(x_1+d, y_2, 0)$, and wavenumber k.
[Math. 74]

$$\Phi(x_1, y_1, y_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left( \frac{d(k_{x_1} + is_3)}{dk_{x_1}} \right) e^{s_3(x_1+d)} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i\{(k_{x_1} + is_3)x_1 + k_{y_1}y_1 + k_{y_2}y_2\}} a(k_{x_1} + is_3, k_{y_1}, k_{y_2}, k)$$

$$\cdot \left( \frac{d(k_{x_1} + is_3)}{dk_{x_1}} \right) e^{s_3 d} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x_1 + k_{y_1}y_1 + k_{y_2}y_2)} a(k_x, k_{y_1}, k_{y_2}, k) e^{s_3 d} dk_x dk_{y_1} dk_{y_2}$$

$$\cdot \cdot \cdot (2-3-18)$$

Hereinafter, $k_x$ and $s_3$ defined by expression (2-3-19) below are used.
[Math. 75]

$$k_x = k_{x_1} + is_3$$

$$s_3 = \frac{-i k_{x_1} \sqrt{k^2 - k_{y_2}^2}}{\sqrt{k^2 - k_{y_1}^2}} = \frac{-i k_x \sqrt{k^2 - k_{y_2}^2}}{\sqrt{k^2 - k_{y_1}^2} + \sqrt{k^2 - k_{y_2}^2}}$$

$$\cdot \cdot \cdot (2-3-19)$$

Expression (2-3-20) below is obtained by Fourier transform of both sides of expression (2-3-18) with respect to $x_1$, $y_1$, and $y_2$.
[Math. 76]

$$\tilde{\Phi}(k_x{}', k_{y_1}{}', k_{y_2}{}', k)$$

$$= \int_{-\infty}^{\infty} \int_{-\infty}^{\infty} \int_{-\infty}^{\infty} e^{i\left(k_x{}' x_1 + k_{y_1}{}' y_1 + k_{y_2}{}' y_2\right)} \Phi(x_1, y_1, y_2, k) dx_1 dy_1 dy_2$$

$$= \frac{1}{(2\pi)^3} \int_{-\infty}^{\infty} \int_{-\infty}^{\infty} \int_{-\infty}^{\infty} e^{i\left(k_x{}' x_1 + k_{y_1}{}' y_1 + k_{y_2}{}' y_2\right)}$$

$$\cdot \int_{-\infty}^{\infty} \int_{-\infty}^{\infty} \int_{-\infty}^{\infty} e^{-i\left\{(k_x x_1 + k_{y_1} y_1 + k_{y_2} y_2\right\}} a(k_x, k_{y_1}, k_{y_2}, k) e^{s_3 d} dk_x dk_{y_1} dk_{y_2} dx_1 dy_1 dy_2$$

$$= \int_{-\infty}^{\infty} \int_{-\infty}^{\infty} \int_{-\infty}^{\infty} \delta(k_x{}' - k_x) \delta(k_{y_1}{}' - k_{y_1}) \delta(k_{y_2}{}' - k_{y_2}) a(k_x, k_{y_1}, k_{y_2}, k) e^{s_3 d} dk_x dk_{y_1} dk_{y_2}$$

$$= a\left(k_x{}', k_{y_1}{}', k_{y_2}{}', k\right) e^{s_3{}' d}$$

$$\cdots (2-3-20)$$

Function $a(k_x, k_{y1}, k_{y2}, k)$ is obtained from expression (2-3-20) as given by expression (2-3-21).
[Math. 77]

$$a\left(k_x, k_{y_1}, k_{y_2}, k\right) = e^{-s_3 d} \tilde{\Phi}(k_x, k_{y_1}, k_{y_2}, k)$$

$$= e^{\frac{i k_x d \sqrt{k^2 - k_{y_2}{}^2}}{\sqrt{k^2 - k_{y_1}{}^2} + \sqrt{k^2 - k_{y_2}{}^2}}} \tilde{\Phi}(k_x, k_{y_1}, k_{y_2}, k)$$

$$\cdots (2-3-21)$$

Therefore, expression (2-3-17) that represents the scattering field function is obtained in a complete form as given by expression (2-3-22) below.
[Math. 78]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left( \frac{d(k_{x_1} + is_3)}{dk_{x_1}} \right) e^{s_3 x_2} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{s_3 x_2} e^{s_4 z} e^{\frac{i\, d(k_{x_1} + is_3)\sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k) \left( \frac{d(k_{x_1} + is_3)}{dk_{x_1}} \right) dk_{x_1} dk_{y_1} dk_{y_2}$$

$$s_3 = \frac{-i k_{x_1} \sqrt{k^2 - k_{y_2}^2}}{\sqrt{k^2 - k_{y_1}^2}} = \frac{-i k_x \sqrt{k^2 - k_{y_2}^2}}{\sqrt{k^2 - k_{y_1}^2} + \sqrt{k^2 - k_{y_2}^2}}$$

$$s_4 = i k_z = i \sqrt{\left( \sqrt{k^2 - k_{y_1}^2} + \sqrt{k^2 - k_{y_2}^2} \right)^2 - (k_{x_1} + is_3)^2}$$

$$\cdots (2 - 3 - 2\,2)$$

Then, the imaging function is obtained as given by expression (2-3-23) below.
[Math. 79]

$$\rho(x,y,z)$$

$$= \int_0^\infty \lim_{\substack{x_2 \to x_1 = x \\ y_2 \to y_1 = y}} \varphi(x_1, y_1, x_2, y_2, z, k)\,dk$$

$$= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)}\, e^{s_4 z}\, e^{\frac{i\,dk_x \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k)\,dk_x dk_{y_1} dk_{y_2}$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)}\, e^{i k_z z}\, e^{\frac{i\,dk_x \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k)\left(\frac{dk}{dk_z}\right) dk_x dk_{y_1} dk_{y_2} dk_z$$

$$k_z = \sqrt{\left(\sqrt{k^2 - k_{y_1}^2} + \sqrt{k^2 - k_{y_2}^2}\right)^2 - k_x^2}$$

$$k = \frac{1}{2}\sqrt{k_x^2 + k_z^2 + 2(k_{y_1}^2 + k_{y_2}^2) + \frac{(k_{y_1}^2 - k_{y_2}^2)^2}{k_x^2 + k_z^2}}$$

$$\frac{dk}{dk_z} = \frac{k_z \sqrt{k^2 - k_{y_1}^2}\sqrt{k^2 - k_{y_2}^2}}{k(k_x^2 + k_z^2)}$$

$$\cdots (2-3-23)$$

Moreover, as compared with the one-dimensional array, the semi-two-dimensional array is capable of including a larger number of transmitting elements and a larger number of receiving elements. Accordingly, it is possible to more efficiently acquire information.

<3. Scattering Field Theory With Consideration of Atmospheric Refraction>

In this chapter, a scattering field theory that takes atmospheric refraction into consideration will be described.

< 3-1. Model of Atmospheric Refractive Index>

As altitude increases from the ground surface, the atmosphere becomes thinner. Furthermore, outer space beyond the stratosphere is in a vacuum state. This atmospheric density is directly linked to the refractive index. The refractive index at the ground level is approximately n ≈ 1.0003, which is extremely close to the value in a vacuum. However, as the propagation distance of radio waves increases, the propagation axis of the radio waves gradually refracts. The altitude dependence of the atmospheric refractive index is given by expression (3-1-1) below.
[Math. 80]

$$n(z) = 1 + (n_0 - 1)e^{-c_e z}$$

$$\cdots (3-1-1)$$

Here, z represents the altitude, and n(z) represents the refractive index at altitude z. $n_0$ represents the refractive index at the ground surface (h=0). $c_e$ is a coefficient that represents the rate of change of the refractive index with respect to changes in altitude.

$n_0$ and $c_e$ are published as constants of the Central Radio Propagation Laboratory (CRPL) Exponential Reference Atmosphere based on measured values within the United States. More specifically, $n_0$ has the relationship given by expression (3-1-2) below with respect to $N_s$, which is called the surface refractive index.
[Math. 81]

$$N_s = (n_0 - 1) \times 10^6$$

$$\cdots (3-1-2)$$

As a standard model, these constants are given as illustrated in expression (3-1-3) below.
[Math. 82]

$$N_s = 313$$

$$c_e = 0.1439 \, km^{-1}$$

$$\cdots (3-1-3)$$

Accordingly, expression (3-1-4) below holds true.
[Math. 83]

$$n_0 = 1 + 313 \times 10^{-6}$$

$$n(z) = 1 + 313 \times 10^{-6} e^{-0.1439 z}$$

$$n(z) = \frac{c_0}{c(z)}$$

$$\cdots (3-1-4)$$

$c_0$ represents the velocity of radio waves in vacuum, and c(z) represents the velocity of radio waves at altitude z.

<3-2. Propagation and Refraction of Plane Waves>

For example, radar electromagnetic waves propagate through vast space where the refractive index changes gradually. The trajectory of such radar electromagnetic waves can be expressed using geometric optics. Specifically, first, the electromagnetic field is expressed as given by expression (3-2-1) below.
[Math. 84]

$$f = ae^{i\phi}$$

$$\cdots (3-2-1)$$

In expression (3-2-1), a represents the amplitude, and $\varphi$ represents the phase called the Eikonal. $\varphi$ is expressed as given by expression (3-2-2) below by separating the time factor.
[Math. 85]

$$\phi = -\omega t + \phi_0(x, y, z)$$

$$\cdots (3-2-2)$$

In expression (3-2-2), $\omega$ represents the angular frequency, t represents the time, and $\varphi_0(x, y, z)$ represents the initial phase of (x, y, z). Expression (3-2-3) below holds true.
[Math. 86]

$$\mathbf{k} = \frac{\partial \phi}{\partial \mathbf{r}} \quad \omega = -\frac{\partial \phi}{\partial t}$$

$$\cdots (3-2-3)$$

In expression (3-2-3), k represents the wavenumber vector, and r represents the position vector. The Eikonal equation is expressed as given by expression (3-2-4) below.
[Math. 87]

$$(\nabla \phi_0)^2 = \frac{\omega^2}{c^2}$$

$$\cdots (3-2-4)$$

In expression (3-2-4), c represents the phase velocity. The wavefront is a family of surfaces (equiphase surfaces) having the same value of $\varphi_0(x, y, z)$. Furthermore, the Eikonal equation is expressed as given by expression (3-2-5) below.
[Math. 88]

$$\left(\frac{\partial}{\partial x}\phi_0\right)^2 + \left(\frac{\partial}{\partial y}\phi_0\right)^2 + \left(\frac{\partial}{\partial z}\phi_0\right)^2 = \frac{\omega^2}{c^2}$$

$$\cdots (3-2-5)$$

In the (x, z) plane with no dependence on the y-axis direction, the trajectory of the electromagnetic wave is obtained as follows. First, when $k_x$ representing the wavenumber in the x-axis direction is constant, expression (3-2-6) below is obtained.
[Math. 89]

$$k_x^2 + k_z(z)^2 = \frac{\omega^2}{c(z)^2}$$

$$\cdots (3-2-6)$$

In expression (3-2-6), $k_z(z)$ represents the wavenumber in the z-axis direction and depends on z. From expression (3-2-6), $k_z(z)$ is expressed as given by expression (3-2-7) below.
[Math. 90]

$$k_z(z) = \pm\sqrt{\frac{\omega^2}{c(z)^2} - k_x^2}$$

$$\cdots (3-2-7)$$

Hereinafter, of the two solutions of expression (3-2-7), the solution with a positive sign is used. The propagation direction of the wave (direction of the wavenumber vector) is expressed as given by expression (3-2-8) below.
[Math. 91]

$$\mathbf{k} = (k_x, 0, k_z) = \left( k_x, 0, \sqrt{\frac{\omega^2}{c(z)^2} - k_x^{\,2}} \right)$$

$$\cdots (3-2-8)$$

The tangent to the trajectory is expressed as given by expression (3-2-9) below.
[Math. 92]

$$\frac{dz}{dx} = \frac{\sqrt{\dfrac{\omega^2}{c(z)^2} - k_x^{\,2}}}{k_x}$$

$$\cdots (3-2-9)$$

Accordingly, the propagation trajectory of the radio wave is given by expression (3-2-10) below.
[Math. 93]

$$x = \int_0^z \frac{k_x}{\sqrt{\dfrac{\omega^2}{c(z)^2} - k_x^{\,2}}} \, dz$$

$$\cdots (3-2-10)$$

FIG. 4 is a simulation diagram illustrating the trajectory of a 1 GHz electromagnetic wave radiated at a radiation angle of 1° from the ground surface. FIG. 4 illustrates a trajectory that takes the refractive index into consideration and a trajectory that does not take the refractive index into consideration. The trajectory that takes the refractive index into consideration is a trajectory derived based on expression (3-2-10) and is assumed to be close to the actual trajectory.

FIG. 5 is a simulation diagram illustrating the trajectory of a 1 GHz electromagnetic wave radiated at a radiation angle of 2.56° from the ground surface. FIG. 5 illustrates, similarly to FIG. 4, a trajectory that takes the refractive index into consideration and a trajectory that does not take the refractive index into consideration. The trajectory that takes the refractive index into consideration is a trajectory derived based on expression (3-2-10) and is assumed to be close to the actual trajectory.

As illustrated in FIG. 4 and FIG. 5, the trajectory differs depending on whether the atmospheric refractive index is taken into consideration. These differences may arise as errors in imaging of the object.

<3-3. Scattering Field Theory with Consideration of Atmospheric Refraction>

In a layered medium, imaging an object in the medium appears challenging because the object is affected by refraction. However, in cases where multiple scattering can be disregarded, imaging objects within a medium becomes relatively straightforward through the application of scattering field theory, as described below.

FIG. 6 is a conceptual diagram illustrating a multilayer medium. For example, in FIG. 6, the z-axis direction corresponds to the vertical direction, and the x-axis direction corresponds to the horizontal direction.

The medium includes n layers from the first layer to the n-th layer in the z-axis direction. The first layer, second layer, ..., n-th layer have heights of $h_1$, $h_2$, ..., $h_n$. The first layer, second layer, ..., n-th layer have dielectric constants of $\varepsilon_1$, $\varepsilon_2$, ..., $\varepsilon_n$. In the first layer, second layer, ..., n-th layer, wave propagation velocities are $c_1$, $c_2$, ..., $c_n$, and the wavenumbers of waves having angular frequency $\omega$ are $k_1$, $k_2$, ..., $k_n$.

According to expression (2-1-16), the scattering field function in the first layer is expressed as given by expression (3-3-1) below.
[Math. 94]

$$\varphi_1(x, y_1, y_2, z, k_1)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k_1)$$

$$\cdot e^{i\{\sqrt{(\sqrt{k_1^2 - k_{y_1}^2} + \sqrt{k_1^2 - k_{y_2}^2})^2 - k_x^2}\}z} dk_x dk_{y_1} dk_{y_2}$$

$$a_1(k_x, k_{y_1}, k_{y_2}, k_1) = \tilde{\varphi}(k_x, k_{y_1}, k_{y_2}, k_1)$$

$$\cdots (3-3-1)$$

Here,

[Math. 95]

$$\tilde{\varphi}$$

represents measurement data at z=0.

The scattering field function in the second layer is expressed as given by expression (3-3-2) below.
[Math. 96]

$$\varphi_2(x, y_1, y_2, z, k_2)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_2(k_x, k_{y_1}, k_{y_2}, k_2)$$

$$\cdot e^{i\{\sqrt{(\sqrt{k_2^2 - k_{y_1}^2} + \sqrt{k_2^2 - k_{y_2}^2})^2 - k_x^2}\}z} dk_x dk_{y_1} dk_{y_2}$$

$$\cdots (3-3-2)$$

The unknown function $a_2(k_x, k_{y1}, k_{y2}, k_2)$ in expression (3-3-2) is obtained as follows.

More specifically, the two scattering field functions in expressions (3-3-1) and (3-3-2) are configured by components of the electromagnetic field that are parallel to the layer interface. When it is possible to disregard that the intensity of the electromagnetic field entering the second layer becomes small due to reflection at the layer interface, Maxwell's equations show that the output values of the two scattering field functions are equal on both sides of the discontinuous surface. Accordingly, expression (3-3-3) below holds true with respect to the boundary surface between layers.
[Math. 97]

$$\varphi_1(x, y_1, y_2, h_1, k_1) = \varphi_2(x, y_1, y_2, 0, k_2)$$

$$\cdots (3-3-3)$$

By taking the inverse Fourier transform of both sides of expression (3-3-3), expression (3-3-4) below is obtained.
[Math. 98]

$$a_2(k_x,k_{y_1},k_{y_2},k_2) = a_1(k_x,k_{y_1},k_{y_2},k_1)e^{i\{\sqrt{(\sqrt{k_1^2-k_{y_1}^2}+\sqrt{k_1^2-k_{y_2}^2})^2-k_x^2}\}h_1}$$

$$= \tilde{\varphi}(k_x,k_{y_1},k_{y_2},k_1)e^{i\{\sqrt{(\sqrt{k_1^2-k_{y_1}^2}+\sqrt{k_1^2-k_{y_2}^2})^2-k_x^2}\}h_1}$$

$$\cdots (3-3-4)$$

By the same procedure, expression (3-3-5) below generally holds true.
[Math. 99]

$$a_n(k_x,k_{y_1},k_{y_2},k_n) = a_{n-1}(k_x,k_{y_1},k_{y_2},k_{n-1})e^{i\{\sqrt{(\sqrt{k_{n-1}^2-k_{y_1}^2}+\sqrt{k_{n-1}^2-k_{y_2}^2})^2-k_x^2}\}h_{n-1}}$$

$$= \tilde{\varphi}(k_x,k_{y_1},k_{y_2},k_1)\prod_{j=1}^{n-1} e^{i\{\sqrt{(\sqrt{k_j^2-k_{y_1}^2}+\sqrt{k_j^2-k_{y_2}^2})^2-k_x^2}\}h_j}$$

$$\cdots (3-3-5)$$

Accordingly, the scattering field function in the n-th layer is expressed as given by expression (3-3-6) below.
[Math. 100]

$$\varphi_n(x,y_1,y_2,z,k_n)$$

$$= \frac{1}{(2\pi)^3}\int_{-\infty}^{\infty}\int_{-\infty}^{\infty}\int_{-\infty}^{\infty} e^{-i(k_x x+k_{y_1}y_1+k_{y_2}y_2)}\tilde{\varphi}(k_x,k_{y_1},k_{y_2},k_1)$$

$$\cdot e^{i\{\sqrt{(\sqrt{k_n^2-k_{y_1}^2}+\sqrt{k_n^2-k_{y_2}^2})^2-k_x^2}\}(z-\sum_{j=1}^{n-1}h_j)}\prod_{j=1}^{n-1} e^{i\{\sqrt{(\sqrt{k_j^2-k_{y_1}^2}+\sqrt{k_j^2-k_{y_2}^2})^2-k_x^2}\}h_j} dk_x dk_{y_1} dk_{y_2}$$

$$\cdots (3-3-6)$$

The imaging function is expressed as given by expression (3-3-7) below.
[Math. 101]

$$\rho_n(x,y,z)$$

$$= \int_{-\infty}^{\infty} \underset{y_1 \to y_2 = y}{Lim} [\varphi_n(x,y_1,y_2,z,k_n)] d\omega$$

$$= \int_{-\infty}^{\infty} \frac{1}{(2\pi)^3} \int_{-\infty}^{\infty}\int_{-\infty}^{\infty}\int_{-\infty}^{\infty} e^{-i(k_x x + k_{y_1} y + k_{y_2} y)}$$

$$\cdot e^{ik_{zn}z} a_n(k_x, k_{y_1}, k_{y_2}, k_n) \left(\frac{dk_n}{dk_{zn}}\right)\left(\frac{d\omega}{dk_n}\right) dk_x dk_{y_1} dk_{y_2} dk_{zn}$$

$$= \int_{-\infty}^{\infty} \frac{1}{(2\pi)^3} \int_{-\infty}^{\infty}\int_{-\infty}^{\infty}\int_{-\infty}^{\infty} e^{-i(k_x x + k_{y_1} y + k_{y_2} y)} e^{ik_{zn}\left(z - \sum_{j=1}^{n-1} h_j\right)} \tilde{\varphi}(k_x, k_{y_1}, k_{y_2}, k_1)$$

$$\cdot \prod_{j=1}^{n-1} e^{i\left\{\sqrt{\left(\sqrt{k_j^2 - k_{y_1}^2} + \sqrt{k_j^2 - k_{y_2}^2}\right)^2 - k_x^2}\right\} h_j} \cdot \left(\frac{dk_n}{dk_{zn}}\right)\left(\frac{d\omega}{dk_n}\right) dk_x dk_{y_1} dk_{y_2} dk_{zn}$$

$$\cdots (3-3-7)$$

Here, when it is assumed that the medium has no dielectric dispersion, expression (3-3-8) below holds true.
[Math. 102]

$$k_{zn} = \sqrt{\left(\sqrt{k_n^2 - k_{y_1}^2} + \sqrt{k_n^2 - k_{y_2}^2}\right)^2 - k_x^2}$$

$$k_n = \frac{1}{2}\sqrt{k_x^2 + k_{zn}^2 + \frac{(k_{y_1}^2 - k_{y_2}^2)^2}{k_x^2 + k_{zn}^2} + 2(k_{y_1}^2 + k_{y_2}^2)}$$

$$\frac{dk_n}{dk_{zn}} = \frac{k_{zn}\sqrt{k_n^2 - k_{y_1}^2}\sqrt{k_n^2 - k_{y_2}^2}}{k_n(k_x^2 + k_{zn}^2)}$$

$$\cdots (3-3-8)$$

The exponential function portions within $\Pi$ in expressions (3-3-6) and (3-3-7) are expressed as integrals by the limiting operation of $h_{j\to}$ 0. Accordingly, the scattering field function considering atmospheric refraction is expressed as given by expression (3-3-9) below.
[Math. 103]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)$$

$$\cdot e^{i\int_0^z \sqrt{\left(\sqrt{k(z_a)^2 - k_{y_1}^2} + \sqrt{k(z_a)^2 - k_{y_2}^2}\right)^2 - k_x^2}\, dz_a} \, dk_x dk_{y_1} dk_{y_2}$$

$$\cdots (3-3-9)$$

Here, k corresponds to the wavenumber of the wave at z=z, $k(z_a)$ corresponds to the wavenumber of the wave at z=$z_a$, and $k_1$ corresponds to the wavenumber of the wave at z=0. That is, k, $k(z_a)$, and $k_1$ can be expressed as given by expression (3-3-10) below.
[Math. 104]

$$k = \frac{\omega}{c(z)} = \frac{\omega(1 + 313 \times 10^{-6} e^{-0.1439 z})}{c_0}$$

$$k(z_a) = \frac{\omega}{c(z_a)} = \frac{\omega(1 + 313 \times 10^{-6} e^{-0.1439 z_a})}{c_0}$$

$$k_1 = k(0)$$

$$\cdots (3-3-10)$$

Also, the imaging function considering atmospheric refraction is expressed as given by expression (3-3-11) below.
[Math. 105]

$$\rho(x, y, z)$$

$$= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} \tilde{\varphi}(k_x, k_{y_1}, k_{y_2}, k_1)$$

$$\cdot e^{i\int_0^z \sqrt{\left(\sqrt{k(z_a)^2 - k_{y_1}^2} + \sqrt{k(z_a)^2 - k_{y_2}^2}\right)^2 - k_x^2}\, dz_a} \, dk_x dk_{y_1} dk_{y_2} d\omega$$

$$\cdots (3-3-11)$$

< 3-4. Variations>

In this chapter, the scattering field theory that takes atmospheric refraction into consideration is applied to an example using a one-dimensional array. However, the scattering field theory that takes atmospheric refraction into consideration may be further applied to an example using a two-dimensional array and a semi-two-dimensional array.
In this chapter, a model of the atmospheric refractive index is shown. However, an atmospheric refractive index determined separately from the model shown in this chapter may be used. For example, an atmospheric refractive index measured at each altitude at an actual installation location may be used.

<4. Configuration and Operations of Imaging Device>

Based on the contents described above, the configuration and operations of an imaging device for imaging an object in a measurement area using measurement data of scattered waves will be described hereinafter.

The waves used for measuring scattered waves as used herein may, for example, be radio waves or may be other waves such as microwaves, millimeter waves, or terahertz waves. The waves may also be light or sound. The measurement area may be a region in the air, and the object may be a flying object. The object in the measurement area has a physical characteristic that is different from that of the surrounding medium. Specifically, the physical characteristic is a physical characteristic that corresponds to the reflectance of the waves. In the case where radio waves are used as the waves, the physical characteristic may be the dielectric constant.

FIG. 7 is a basic schematic diagram of the imaging device according to the present embodiment. Imaging device 100 shown in FIG. 7 includes a plurality of transmitters 101, a plurality of receivers 102, and information processing circuit 103. Imaging device 100 may further include display 104.

Each transmitter 101 is a circuit that transmits waves. More specifically, each transmitter 101 transmits waves to the measurement area. Each transmitter 101 may be a transmitting antenna or may include a plurality of transmitting elements such as a plurality of transmitting antenna elements.

Each receiver 102 is a circuit that receives scattered waves. More specifically, each receiver 102 receives scattered waves from the measurement area. Each receiver 102 may be a receiving antenna or may include a plurality of receiving elements such as a plurality of receiving antenna elements.

The plurality of transmitters 101 and the plurality of receivers 102 may be arranged in a one-dimensional array, may be arranged in a two-dimensional array, and may be arranged in a semi-two-dimensional array.

Information processing circuit 103 is a circuit that performs information processing. More specifically, information processing circuit 103 obtains measurement data of scattered waves, and images an object in the measurement area using the measurement data of the scattered waves. For example, information processing circuit 103 may perform computational processing indicated by the theory described above when imaging the object using the measurement data.

Information processing circuit 103 may also be a computer or a processor of a computer. Information processing circuit 103 may perform information processing by reading out a program from memory and executing the program. Alternatively, information processing circuit 103 may be a dedicated circuit that images an object in the measurement area in accordance with measurement data.

Information processing circuit 103 may be capable of communicating with the plurality of transmitters 101 and the plurality of receivers 102. Information processing circuit 103 may control the operation of the plurality of transmitters 101 and the plurality of receivers 102. Information processing circuit 103 may obtain position information and measurement data from the plurality of transmitters 101 and the plurality of receivers 102.

In order to image the object, information processing circuit 103 may generate an image that indicates the object. Information processing circuit 103 may output the image indicating the object on display 104 or the like. Alternatively, information processing circuit 103 may output the image indicating the object to a printer (not illustrated in the drawings). As another alternative, information processing circuit 103 may transmit the image as electronic data to a different device (not illustrated in the drawings) via wired or wireless communication.

Display 104 is a display device such as a liquid crystal display. Note that display 104 is merely an arbitrary element and is not an essential element. Display 104 may be an external device that is not included in the configuration of imaging device 100.

FIG. 8 is a flowchart showing basic operations of imaging device 100 shown in FIG. 7. More specifically, the operations shown in FIG. 8 are performed by the elements of imaging device 100 shown in FIG. 7 such as the plurality of transmitters 101, the plurality of receivers 102, and information processing circuit 103.

First, each transmitter 101 transmits waves to the measurement area in the atmosphere (S101). Each receiver 102 receives scattered waves from the measurement area (S102). Then, information processing circuit 103 images the object in the measurement area using measurement data of the scattered waves (S103, S104, and S105).

More specifically, in imaging the object, information processing circuit 103 first derives the scattering field function using the measurement data (S103). Here, the scattering field function is a function that receives the transmission position of the wave and the reception position of the scattered wave as input and outputs the amount of the scattered wave at the reception position. In deriving the scattering field function, information processing circuit 103 reflects in the scattering field function that the wavenumber of the wave changes as the refractive index in the atmosphere changes with height in the atmosphere.

Next, information processing circuit 103 derives the imaging function using the scattering field function (S104). Here, the imaging function is a function that receives an imaging target position as input and outputs an image intensity at the imaging target position, and is a function defined using an amount output from the scattering field function in response to inputting the imaging target position into the scattering field function as the transmission and reception positions.

Finally, information processing circuit 103 images the object in the measurement area using the imaging function (S105).

This allows imaging device 100 to derive the scattering field function and the imaging function in which the atmospheric refractive index that varies with altitude is reflected. Accordingly, imaging device 100 is capable of imaging an object in the measurement area in the atmosphere with high accuracy.

For example, the plurality of transmitters 101 and the plurality of receivers 102 may be arranged along a straight line parallel to the y-axis. The measurement area in the atmosphere may be divided into a plurality of layers.

The scattering field function of the n-th layer of the plurality of layers may be expressed as follows.

[Math. 106]

$$
\varphi_n(x, y_1, y_2, z, k_n)
$$

$$
= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)
$$

$$
\cdot e^{i\left\{ \sqrt{(\sqrt{k_n^2 - k_{y_1}^2} + \sqrt{k_n^2 - k_{y_2}^2})^2 - k_x^2} \right\}(z - \sum_{j=1}^{n-1} h_j)} \prod_{j=1}^{n-1} e^{i\left\{ \sqrt{(\sqrt{k_j^2 - k_{y_1}^2} + \sqrt{k_j^2 - k_{y_2}^2})^2 - k_x^2} \right\} h_j} dk_x dk_{y_1} dk_{y_2}
$$

Here, x and z of the scattering field function respectively represent the x-coordinate and z-coordinate of the transmission position and reception position. $y_1$ of the scattering field function represents the y-coordinate of the transmission position. $y_2$ of the scattering field function represents the y-coordinate of the reception position. $k_1$, $k_j$, and $k_n$ respectively represent the wavenumbers of the wave in the first layer, j-th layer, and n-th layer of the plurality of layers. $h_j$ represents the height of the j-th layer. $k_x$, $k_{y1}$, and $k_{y2}$ respectively represent variables corresponding to the wavenumbers with respect to x, $y_1$, and $y_2$ of the scattering field function.

Also,

[Math. 107]

$$
\tilde{\varphi}
$$

represents the measurement data that has been Fourier transformed.

This allows imaging device 100 to image an object in the measurement area in the atmosphere with high accuracy by using the scattering field function derived layer by layer from the measurement data obtained by the plurality of transmitters 101 and the plurality of receivers 102 arranged in a straight line.

For example, the imaging function of the n-th layer of the plurality of layers may be expressed as follows.

[Math. 108]

$$
\rho_n(x, y, z)
$$

$$
= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} e^{ik_{zn}(z - \sum_{j=1}^{n-1} h_j)} \tilde{\varphi}(k_x, k_{y_1}, k_{y_2}, k_1)
$$

$$
\cdot \prod_{j=1}^{n-1} e^{i\left\{ \sqrt{(\sqrt{k_j^2 - k_{y_1}^2} + \sqrt{k_j^2 - k_{y_2}^2})^2 - k_x^2} \right\} h_j} \cdot \left( \frac{dk_n}{dk_{zn}} \right) \left( \frac{d\omega}{dk_n} \right) dk_x dk_{y_1} dk_{y_2} dk_{zn}
$$

Here, x, y, and z of the imaging function respectively represent the x-coordinate, y-coordinate, and z-coordinate of the imaging target position. $\omega$ represents the angular frequency of the wave.

$k_{zn}$ is defined as follows.

[Math. 109]

$$k_{zn} = \sqrt{\left(\sqrt{k_n^2 - k_{y_1}^2} + \sqrt{k_n^2 - k_{y_2}^2}\right)^2 - k_x^2}$$

This allows imaging device 100 to image an object in the measurement area in the atmosphere with high accuracy by using the imaging function derived layer by layer from the measurement data obtained by the plurality of transmitters 101 and the plurality of receivers 102 arranged in a straight line.

For example, the plurality of transmitters 101 and the plurality of receivers 102 may be arranged along a straight line parallel to the y-axis.

The scattering field function may be expressed as follows.

[Math. 110]

$$\varphi(x, y_1, y_2, z, k)$$
$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)$$
$$\cdot e^{i \int_0^z \sqrt{\left(\sqrt{k(z_a)^2 - k_{y_1}^2} + \sqrt{k(z_a)^2 - k_{y_2}^2}\right)^2 - k_x^2} \, dz_a} \, dk_x dk_{y_1} dk_{y_2}$$

Here, x and z of the scattering field function respectively represent the x-coordinate and z-coordinate of the transmission position and reception position. $y_1$ of the scattering field function represents the y-coordinate of the transmission position. $y_2$ of the scattering field function represents the y-coordinate of the reception position. k represents the wavenumber of the wave at a position where the z-coordinate is z. $k_1$ represents the wavenumber of the wave at a position where the z-coordinate is 0. $k(z_a)$ represents the wavenumber of the wave at a position where the z-coordinate is $z_a$. $z_a$ represents a variable corresponding to the z-coordinate. $k_x$, $k_{y_1}$, and $k_{y_2}$ respectively represent variables corresponding to the wavenumbers with respect to x, $y_1$, and $y_2$ of the scattering field function.

Also,

[Math. 111]

$$\tilde{\varphi}$$

represents the measurement data that has been Fourier transformed.

This allows imaging device 100 to image an object in the measurement area in the atmosphere with high accuracy by using the scattering field function derived from the measurement data obtained by the plurality of transmitters 101 and the plurality of receivers 102 arranged in a straight line.

For example, the imaging function may be expressed as shown below.

[Math. 112]

$$\rho(x, y, z)$$
$$= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} \tilde{\varphi}(k_x, k_{y_1}, k_{y_2}, k_1)$$
$$\cdot e^{i \int_0^z \sqrt{\left(\sqrt{k(z_a)^2 - k_{y_1}^2} + \sqrt{k(z_a)^2 - k_{y_2}^2}\right)^2 - k_x^2} \, dz_a} \, dk_x dk_{y_1} dk_{y_2} d\omega$$

Here, x, y, and z of the imaging function respectively represent the x-coordinate, y-coordinate, and z-coordinate of the imaging target position. $\omega$ represents a variable corresponding to the angular frequency of the wave.

This allows imaging device 100 to image an object in the measurement area in the atmosphere with high accuracy by using the imaging function derived from the measurement data obtained by the plurality of transmitters 101 and the plurality of receivers 102 arranged in a straight line.

For example, the wave may be a microwave. This allows imaging device 100 to inhibit attenuation of the wave by moisture in the measurement area compared to electromagnetic waves with shorter wavelengths.

For example, other elements, expressions, variables, and so on described in the present embodiment are applicable as appropriate to the plurality of transmitters 101, the plurality of receivers 102, information processing circuit 103, the scattering field function, the imaging function, and so on described above as to the basic configuration and the basic operations. The scattering field function, the imaging function, and so on given in the present embodiment may be modified and applied as appropriate. For example, it is possible to use a mathematical expression that represents substantially the same content as that given by the mathematical expression described above, or to use any other mathematical expression derived based on the theory described above.

(Additional Comments)

While some aspects of the imaging device have been described thus far with reference to the embodiment, the modes of the imaging device are not limited to this embodiment. Any modification conceivable by those skilled in the art may be made to the embodiment, and a plurality of elements according to the embodiment may be combined arbitrarily. For example, processing that is executed by a specific element according to the embodiment may be executed by a different element, instead of the specific element. Moreover, a sequence of a plurality of processes may be changed, or a plurality of processes may be executed in parallel.

The imaging method including steps executed by each element of the imaging device may be executed by any arbitrary device or system. For example, part or all of the imaging method may be executed by a computer that includes, for example, a processor, memory, and an input/output circuit. At this time, a program for causing the computer to execute the imaging method may be executed by the computer to execute the imaging method.

The above-described program may be recorded on a non-transitory computer-readable recording medium.

Each element of the imaging device may be configured by dedicated hardware or by general-purpose hardware that executes the above-described program or the like, or may be configured by a combination of these. The general-purpose hardware may be configured by, for example, memory that records the program and a general-purpose processor that reads out and executes the program from the memory. The memory as used herein may, for example, be semiconductor memory or a hard disk, and the general-purpose processor may, for example, be a CPU.

The dedicated hardware may be configured by, for example, memory and a dedicated processor. For example, the dedicated processor may execute the imaging method described above with reference to the memory for recording measurement data.

Each element of the imaging device may be an electric circuit. These electric circuits may be configured as a single electric circuit as a whole, or each may be a different electric circuit. These electric circuits may correspond to dedicated hardware or general-purpose hardware that executes the above-described program or the like.

The imaging device is not limited to being a physically integrated device, and may include a plurality of sub-devices arranged in a distributed manner. The imaging device may also be referred to as an imaging system.

[Industrial Applicability]

One aspect of the present disclosure is useful in an imaging device that images an object in a measurement area using measurement data of scattered waves, and is applicable to an exploration system or the like that explores an object in the measurement area in the atmosphere.

[Reference Signs List]

| | |
|---|---|
| 100 | imaging device |
| 101 | transmitter |
| 102 | receiver |
| 103 | information processing circuit |
| 104 | display |

**Claims**

1. An imaging device comprising:

   a plurality of transmitters that each transmit a wave to a measurement area in an atmosphere;
   a plurality of receivers that each receive a scattered wave of the wave from the measurement area; and
   an information processing circuit that images an object in the measurement area using measurement data of the scattered wave,

   wherein

   in imaging the object, the information processing circuit:

   derives, using the measurement data, a scattering field function that receives a transmission position of the wave and a reception position of the scattered wave as input and outputs an amount of the scattered wave at the reception position;
   derives an imaging function that receives an imaging target position as input and outputs an image intensity at the imaging target position, and is defined using an amount output from the scattering field function in response to inputting the imaging target position into the scattering field function as the transmission position and the reception position; and
   images the object in the measurement area using the imaging function, and

   in deriving the scattering field function, the information processing circuit reflects in the scattering field function that a wavenumber of the wave changes as a refractive index in the atmosphere changes with height in the atmosphere.

2. The imaging device according to claim 1, wherein

   the plurality of transmitters and the plurality of receivers are arranged along a straight line parallel to a y-axis,
   the measurement area in the atmosphere is divided into a plurality of layers, and
   the scattering field function of an n-th layer of the plurality of layers is expressed as:

   [Math. 1]

   $$\varphi_n(x, y_1, y_2, z, k_n)$$

   $$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)$$

   $$\cdot e^{i\left\{\sqrt{(\sqrt{k_n^2 - k_{y_1}^2} + \sqrt{k_n^2 - k_{y_2}^2})^2 - k_x^2}\right\}\left(z - \sum_{j=1}^{n-1} h_j\right)} \prod_{j=1}^{n-1} e^{i\left\{\sqrt{(\sqrt{k_j^2 - k_{y_1}^2} + \sqrt{k_j^2 - k_{y_2}^2})^2 - k_x^2}\right\} h_j} dk_x dk_{y_1} dk_{y_2}$$

   where x and z of the scattering field function respectively represent an x-coordinate and a z-coordinate of the transmission position and the reception position, $y_1$ of the scattering field function represents a y-coordinate of the transmission position, $y_2$ of the scattering field function represents a y-coordinate of the reception position, $k_1$, $k_j$, and $k_n$ respectively represent wavenumbers of the wave in a first layer, a j-th layer, and the n-th layer of the plurality of layers, $h_j$ represents a height of the j-th layer, and $k_x$, $k_{y1}$, and $k_{y2}$ respectively represent variables corresponding to wavenumbers with respect to x, $y_1$, and $y_2$ of the scattering field function, and

   [Math. 2]

   $$\tilde{\varphi}$$

represents the measurement data that has been Fourier transformed.

3. The imaging device according to claim 2, wherein

the imaging function of the n-th layer of the plurality of layers is expressed as:

[Math. 3]

$$\rho_n(x, y, z)$$

$$= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} e^{ik_{zn}\left(z - \sum_{j=1}^{n-1} h_j\right)} \tilde{\varphi}(k_x, k_{y_1}, k_{y_2}, k_1)$$

$$\cdot \prod_{j=1}^{n-1} e^{i\left\{\sqrt{\left(\sqrt{k_j^2 - k_{y_1}^2} + \sqrt{k_j^2 - k_{y_2}^2}\right)^2 - k_x^2}\right\} h_j} \cdot \left(\frac{dk_n}{dk_{zn}}\right)\left(\frac{d\omega}{dk_n}\right) dk_x dk_{y_1} dk_{y_2} dk_{zn}$$

where x, y, and z of the imaging function respectively represent an x-coordinate, a y-coordinate, and a z-coordinate of the imaging target position, $\omega$ represents an angular frequency of the wave, and $k_{zn}$ is defined as:

[Math. 4]

$$k_{zn} = \sqrt{\left(\sqrt{k_n^2 - k_{y_1}^2} + \sqrt{k_n^2 - k_{y_2}^2}\right)^2 - k_x^2}$$

.

4. The imaging device according to claim 1, wherein

the plurality of transmitters and the plurality of receivers are arranged along a straight line parallel to a y-axis, and the scattering field function is expressed as:

[Math. 5]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\varphi}(k_x, k_{y_1}, k_{y_2}, k_1)$$

$$\cdot e^{i\int_0^z \sqrt{\left(\sqrt{k(z_a)^2 - k_{y_1}^2} + \sqrt{k(z_a)^2 - k_{y_2}^2}\right)^2 - k_x^2}\, dz_a} dk_x dk_{y_1} dk_{y_2}$$

where x and z of the scattering field function respectively represent an x-coordinate and a z-coordinate of the transmission position and the reception position, $y_1$ of the scattering field function represents a y-coordinate of the transmission position, $y_2$ of the scattering field function represents a y-coordinate of the reception position, k represents a wavenumber of the wave at a position where the z-coordinate is z, $k_1$ represents a wavenumber of the wave at a position where the z-coordinate is 0, $k(z_a)$ represents a wavenumber of the wave at a position where the z-coordinate is $z_a$, $z_a$ represents a variable corresponding to the z-coordinate, and $k_x$, $k_{y_1}$, and $k_{y_2}$ respectively represent variables corresponding to wavenumbers with respect to x, $y_1$, and $y_2$ of the scattering field function, and

[Math. 6]

$$\tilde{\varphi}$$

represents the measurement data that has been Fourier transformed.

5. The imaging device according to claim 4, wherein

the imaging function is expressed as:

[Math. 7]

$$\rho(x,y,z)$$

$$= \int_{-\infty}^{\infty} \frac{1}{(2\pi)^3} \int_{-\infty}^{\infty} \int_{-\infty}^{\infty} \int_{-\infty}^{\infty} e^{-i(k_x x + k_{y_1} y + k_{y_2} y)} \tilde{\varphi}(k_x, k_{y_1}, k_{y_2}, k_1)$$

$$\cdot e^{i\int_0^z \sqrt{\left(\sqrt{k(z_a)^2 - k_{y_1}^2} + \sqrt{k(z_a)^2 - k_{y_2}^2}\right)^2 - k_x^2} \, dz_a} \, dk_x dk_{y_1} dk_{y_2} d\omega$$

where x, y, and z of the imaging function respectively represent an x-coordinate, a y-coordinate, and a z-coordinate of the imaging target position, and ω represents a variable corresponding to an angular frequency of the wave.

6. An imaging method comprising:

transmitting, by each of a plurality of transmitters, a wave to a measurement area in an atmosphere;
receiving, by each of a plurality of receivers, a scattered wave of the wave from the measurement area; and
imaging an object in the measurement area using measurement data of the scattered wave, wherein
the imaging of the object includes:

deriving, using the measurement data, a scattering field function that receives a transmission position of the wave and a reception position of the scattered wave as input and outputs an amount of the scattered wave at the reception position;
deriving an imaging function that receives an imaging target position as input and outputs an image intensity at the imaging target position, and is defined using an amount output from the scattering field function in response to inputting the imaging target position into the scattering field function as the transmission position and the reception position; and
imaging the object in the measurement area using the imaging function, and

the deriving of the scattering field function includes reflecting in the scattering field function that a wavenumber of the wave changes as a refractive index in the atmosphere changes with height in the atmosphere.

FIG. 1

One-dimensional multistatic antenna

$P_2(x, y_2, z)$

$\rho_2$

$P_1(x, y_1, z)$

$\rho_1$

Region D

$P(\xi, \eta, \zeta)$

x

y

z

FIG. 2

# FIG. 3

## FIG. 4

Not considering refractive index

Considering refractive index

z [km]

x [km]

## FIG. 5

Not considering refractive index

Considering refractive index

z [km]

x [km]

# FIG. 6

# FIG. 7

```
           101
   ┌──────────────┐
   │ Transmitter  │                                    100
   └──────────────┘                                 ╱
                        103                    104
   ┌──────────────┐  ┌────────────┐     ┌ ─ ─ ─ ─ ─ ─ ┐
         102        │ Information │       Display
   ┌──────────────┐ │ processing  │─ ─ ─ └ ─ ─ ─ ─ ─ ─ ┘
   │  Receiver    │ │ circuit     │
   └──────────────┘ └────────────┘
```

# FIG. 8

```
            ┌──────────┐
            │  START   │
            └──────────┘
                 │
    ┌────────────────────────────┐
    │    Transmit waves to       │── S101
    │    measurement area        │
    └────────────────────────────┘
                 │
    ┌────────────────────────────┐
    │  Receive scattered waves   │── S102
    │   from measurement area    │
    └────────────────────────────┘
                 │
    ┌────────────────────────────┐
    │ Derive scattering field function │── S103
    └────────────────────────────┘
                 │
    ┌────────────────────────────┐
    │ Derive imaging function using   │── S104
    │    scattering field function    │
    └────────────────────────────┘
                 │
    ┌────────────────────────────┐
    │ Image object in measurement │── S105
    │  area using imaging function │
    └────────────────────────────┘
                 │
            ┌──────────┐
            │   END    │
            └──────────┘
```

## INTERNATIONAL SEARCH REPORT

| International application No. |
| --- |
| **PCT/JP2024/009507** |

**A.    CLASSIFICATION OF SUBJECT MATTER**

*G01N 22/00*(2006.01)i; *G01S 13/89*(2006.01)i; *G01S 15/89*(2006.01)i
FI:    G01N22/00 S; G01S15/89 B; G01S13/89

According to International Patent Classification (IPC) or to both national classification and IPC

**B.    FIELDS SEARCHED**

Minimum documentation searched (classification system followed by classification symbols)

G01N22/00-G01N22/04; G01S7/00-G01S7/64; G01S13/00-G01S13/95; G01S15/00-G01S15/96; G01N29/00-G01N29/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022/265017 A1 (KIMURA, Kenjiro) 22 December 2022 (2022-12-22)<br>entire text | 1-6 |
| A | WO 2014/125815 A1 (NATIONAL UNIVERSITY CORPORATION KOBE UNIVERSITY) 21 August 2014 (2014-08-21)<br>entire text | 1-6 |
| A | WO 2015/008554 A1 (TOHOKU UNIVERSITY) 22 January 2015 (2015-01-22)<br>entire text | 1-6 |
| A | JP 2019-523880 A (HERRING, Rodney) 29 August 2019 (2019-08-29)<br>entire text | 1-6 |
| A | US 6703596 B1 (LOCKHEED MARTIN CORPORATION) 09 March 2004 (2004-03-09)<br>entire text | 1-6 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/009507** |

**C. DOCUMENTS CONSIDERED TO BE RELEVANT**

| Category* | Citation of document, with indication, where appropriate, of the relevant passages | Relevant to claim No. |
| --- | --- | --- |
| A | US 4855747 A (TRUSTEES OF THE UNIVERSITY OF PENNSYLVANIA) 08 August 1989 (1989-08-08) entire text | 1-6 |
| A | 木寺正平, マイクロ波イメージングによる複素誘電率推定-レーダとトモグラフィの融合-, 可視化情報学会誌, vol. 40, no. 159, 01 October 2020, pages 136-139, (KIDERA, Shouhei. Complex Permittivity Reconstruction for Microwave Imaging - Bi-directional Processing between Radar and Tomography -, Journal of the Visualization Society of Japan) entire text | 1-6 |
| A | 山本衛ほか, 地上からの大気観測レーダーの技術課題, 電子情報通信学会2004年通信ソサイエティ大会講演論文集1, 08 September 2004, pages SS-13 to SS-14, (YAMAMOTO, Mamoru et al., Proceedings of the 2004 IEICE Communications Society Conference), non-official translation (Technical issues of ground-based atmospheric observation radar) entire text | 1-6 |

Form PCT/ISA/210 (second sheet) (July 2022)

**INTERNATIONAL SEARCH REPORT**
Information on patent family members

International application No.

**PCT/JP2024/009507**

| Patent document cited in search report | | | Publication date (day/month/year) | Patent family member(s) | | | Publication date (day/month/year) |
|---|---|---|---|---|---|---|---|
| WO | 2022/265017 | A1 | 22 December 2022 | CN | 117501112 | A | |
| WO | 2014/125815 | A1 | 21 August 2014 | US | 2015/0377778 | A1 | |
| WO | 2015/008554 | A1 | 22 January 2015 | (Family: none) | | | |
| JP | 2019-523880 | A | 29 August 2019 | WO | 2017/214711 | A1 | |
| US | 6703596 | B1 | 09 March 2004 | (Family: none) | | | |
| US | 4855747 | A | 08 August 1989 | (Family: none) | | | |

Form PCT/ISA/210 (patent family annex) (July 2022)

**EP 4 703 712 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62066145 S
- WO 2014125815 A
- WO 2015136936 A
- WO 2021020387 A
- WO 2021053971 A